# EUROPÄISCHE PATENTSCHRIFT

(11) **EP 1 963 999 B1**
(45) Veröffentlichungstag und Bekanntmachung des Hinweises auf die Patenterteilung: **17.03.2010**
(21) Anmeldenummer: 06829402.4
(22) Anmeldetag: 08.12.2006
(51) Int. Cl.: G03B 21/62, C03C 12/00, C03C 17/00, E04F 13/08, G09F 19/18, B44F 1/10

(54) **Fassadenelement als Projektionsglaselement für die Fassaden-Projektion an Gebäuden und Verfahren zu seiner Herstellung**
Façade element as projection glass element for façade projection on buildings, and method for producing same
Élément de façade pour élément de projection en verre pour la projection en façade sur des bâtiments et son procédé de fabrication

(30) Priorität: 10.12.2005 DE 102005059133; 10.12.2005 DE 102005059132
(43) Veröffentlichungstag der Anmeldung: 03.09.2008
(73) Patentinhaber: ISOLAR Isolierglaserzeugung GmbH, 9020 Klagenfurt (AT)
(72) Erfinder: KRAMPL, Franz, A-9220 Veiden/Wörthersee (AT); CESNIK, Gerhard, A-9020 Klagenfurt (AT)
(74) Vertreter: Riebling, Peter
(86) Internationale Anmeldenummer: PCT/EP2006/011790
(87) Internationale Veröffentlichungsnummer: WO 2007/065694

(56) Entgegenhaltungen:
- EP-A- 0 964 288
- EP-B1- 1 192 111
- DE-U1-202004 002 259
- US-A1- 2004 169 789

## Beschreibung

Gegenstand der Erfindung ist ein Fassadenelement in seiner Ausbildung als Glaselement mit Projektionseigenschaften, insbesondere mit Rückprojektionseigenschaften als auch Auflichtprojektionseigenschaften. Es soll als Fassadenelement und als Raumteilerelement kostengünstig und großformatig herstellbar sein und einen guten Hell-Dunkel-Kontrast bei guter seitlicher Erkennbarkeit bieten.

Mit dem Gegenstand des DE 20 2004 002 259 U1 ist ein Fassadenelement bekannt geworden, das als eine Mehrzahl von vertikal untereinander angeordneten, schwenkbaren Lamellen aus VSG (Verbund-Sicherheitsglas) besteht. Das aus den Lamellen gebildete Fassadenelement wird vor eine bestehende Gebäudefassade vorgehängt. Es kann wahlweise vor eine Fensteröffnung oder eine Fassadenwand gehängt werden. Die Lamellen sind als Elemente entweder für eine Durchlicht- oder eine Rück projektion ausgebildet. Bei Bedarf kann auch eine Schutzscheibe vor den Lamellen angeordnet sein.

Ein solcher Aufbau hat jedoch den Nachteil, dass es sich um ein gesondertes Bauteil handelt, das nur mit großem Aufwand nachträglich vor eine Fassade montiert werden kann. Es hat den weiteren Nachteil, dass es nur an den Stellen an der Fassade montiert werden kann, wo noch Platz ist. Es dürfen keine Fensteröffnung oder Lüftungsöffnungen verdeckt werden.

Auch sind die Handhabbarkeit und die Reinigungsmöglichkeit eingeschränkt und mit dem schwenkbaren Lamellenaufbau kann stets nur ein. Kompromiss zwischen einer nicht-sichtbaren Ruhestellung (geöffnete Lamellen) und einer sichtbaren Arbeitsstellung (geschlossene Lamellen) erreicht werden.

Dadurch wird die Brillanz der Darstellung, sowie deren Sichtbarkeit und Schärfe aus großen Entfernungen beeinträchtigt.

Die nachfolgenden Druckschriften beschäftigen sich mit Problemen der Verbesserung der Brillanz und der Abbildungsschärfe. Die Anwendung auf große Formate, wie sie im Fassadenbereich benötigt werden, wird jedoch nicht beschrieben.

In der EP1192111B1 wird ein Rückprojektionsschirm mit einer Vielzahl von Mikroglaskügelchen in optischem Kontakt mit einem Substrat genannt. In dieser Schrift werden eine Vielzahl von transparenten Mikrokügelchen mit einem Brechungsindex von 1,6 bis 1,7 in optischem Kontakt mit einem Substrat und eingebettet in eine nicht transparente Matrix genannt, wobei die Mehrheit der monoschichtartig eingebetteten Mikrokügelchen die nicht transparente Matrixschicht durchdringen und in direktem Kontakt mit dem darunter liegenden Substrat positioniert sind.

Es wird nicht ein VSG- beziehungsweise Isolierglasaufbau erwähnt und auch keine transparente Haftmatrix, die durch Sonnenbestrahlung automatisch oder durch elektrischen Strom einen opaken Zustand einnehmen kann.

Mit der Druckschrift US 2004/169789 A1 wird ein Glaselement mit variablen, optischen Eigenschaften offenbart, wobei zum Beispiel ein Schwebstoffsystem mit mindestens einem absorbierenden Element verbunden ist, welches aus einem getönten Glas- oder Kunststoffsubstrat, aus einer getönten Folie aus flexiblem Polymer in thermoplastischer Ausführung, aus einem Kunststofffilm, welcher mittels einem Substrat satiniert ist, aus einer dünnen, absorbierenden Schicht, welche auf einer Oberfläche des Glases oder des Kunststoff-Substrates anordnungsbar ist, oder aus einem flexiblem Polymer gebildet ist und Flüssigkristalltröpfchen aufweist.
Diese Erfindung weist den Nachteil auf, dass dieser die Einbettung von Hohlglaskügelchen in einer Haftmatrix, welche z.B. im Siebdruckverfahren auf der Oberfläche eines Glaselementes aufgebracht ist, nicht zu entnehmen ist.

Mit der Druckschrift DE 20 2004 002 259 U1 wird ein Fassadenelement für ein Bauwerk offenbart, wobei das Fassadenelement eine Projektionsfläche zur Abbildung einer Lichtprojektion aufweist und als verstellbare Lamelle ausgebildet ist, wobei die Projektionsfläche durch eine zwischen zwei Scheiben eingebettete Folie ausgebildet ist, die diffus oder thermotrope ausgebildet ist und mindestens einen lichtemittierenden Bereich aufweist:
Dieser Druckschrift ist die Ausbildung eines Glaselementes mit einer Hohlglaskügelchen aufweisenden Schicht nicht zu entnehmen.

Mit der Druckschrift EP 1 192 111 B1 wird ein Rückprojektionsschirm mit einer Vielzahl von Mikroglaskügelchen in einem Substrat, eingebettet in eine nichttransparente Matrix offenbart, wobei die Mikroglaskügelchen die Matrix durchdringen und in direktem Kontakt mit dem darunter liegenden Substrat positioniert sind.
Diese Druckschrift weist den Nachteil auf, dass die eingebetteten Glaskügelchen mit dem darunter liegenden Substrat in Kontakt stehen, was eine Beschichtung einer Glasoberfläche im Siebdruckverfahren ausschließt.

Mit der Druckschrift EP 0964 288 A2 wird ein elektrisch kontrollierbares System offenbart, welches ein streuendes und/oder übertragendes variables Licht aufweist, wobei das System einen zweckmäßigen Film mit einer leitenden Schicht aufweist, welcher aktive Elemente in Form von polarisierten Partikeln oder Flüssigkristalle aufweist, die mit zweifarbigen Farben verbunden sind und in Suspension in einem Medium sind, worin das System mit ein oder mehreren Mitteln zur Vermeidung/Verminderung zum Abbau von Lichtreduktion von mindestens einigen der aktiven Elemente, im Besonderen der zweifarbigen Farben und/oder der polarisierten Partikel.
Die Druckschrift weist den Nachteil auf, dass die Anordnung von Hohlglaskügelchen in einer Schicht, welche im Siebdruckverfahren auf die Oberfläche eines Glaselementes aufgebracht ist, dieser nicht zu entnehmen ist.

### Darstellung der Erfindung

Der Erfindung liegt die Aufgabe zugrunde, ein Fassadenelement in Form eines Rückbildprojektionsschirms beziehungsweise eines Durchlichtprojektionsschirms als auch eines Auflichtprojektionsschirms zu schaffen, das bei großen Abmessungen kostengünstig hergestellt werden kann, einen hohen Kontrast und eine hohe Farbtreue und einen großen seitlichen Betrachtungswinkel bei dunkler und heller Umgebung aufweist, wobei eine diffus wirkende Oberfläche mittels einem Siebdruckverfahren auf die Oberfläche eines Glaselementes aufgebracht ist.

Zur Lösung der gestellten Aufgabe ist die Erfindung durch die technische Lehre des Anspruches 1 gekennzeichnet.

Mit dieser technischen Lehre ergibt sich der Vorteil, dass das Projektionsglaselement nun selbst Teil der Fassade (als Fenster oder Fassadenplatte) ist und nicht mehr einer Fassade vorgehängt ist, eine ausgezeichnete Brillanz (Helligkeit, Kontrast, Abbildungsschärfe) der Darstellung auch bei seitlichem Betrachtungswinkel bietet und einfach bei großen Formaten herstellbar ist.

Bei der DE 20 2004 002 259 U1 bestand der Nachteil, dass das beschriebene Fassadenelement in ästhetisch unschöner Weise vor eine vorhandene Fassade vorgehängt werden musste. Dies beeinträchtigt das Aussehen eines Gebäudes in entscheidendem Maße und darüber hinaus gibt es Platzprobleme bei der Anbringung relativ großflächiger Projektionswände von z. B. 2 x 5 oder 3 x 6 Metern.

Es bedarf überdies gesonderter, städtebaulicher Genehmigungen, weil die Fassade durch eine vorgehängte Projektionsfläche in entscheidendem Maß verändert wird. Die Halterung einer solchen, vorgehängten Projektionsfläche ist im Übrigen problematisch, denn Sie muss hohen Sturmlasten und starken Witterungseinflüssen (Schlagregen) standhalten.

Hier setzt die Erfindung ein, die vorsieht, dass das Projektionsglaselement als Isolierscheiben-Aufbau ausgebildet ist, wobei der Isolierscheibenaufbau aus einem projektornahen Glaselement aus einem Verbundsicherheitsglas besteht, da durch diesen Verbund-Sicherheitsglasaufbau es leicht möglich ist ein diffuses Glaselement herzustellen, welches wie ein Isolierglasfenster unmittelbar Teil der Fassade (als Fenster oder Fassadenplatte) ist. Wichtig ist nun, dass der Isolierscheiben-Aufbau mindestens einen Scheibenzwischenraum bzw. einen Luftzwischenraum zu der äußeren Glasscheibe aufweist und dass dieser Scheibenzwischenraum bzw. Luftzwischenraum mit Luft, Edelgas oder einem getrockneten Schutzgas gefüllt ist. Auf diese Weise wird die diffuse Projektoroberfläche (Diffusorschicht) in optimaler Weise geschützt und braucht nicht mehr zusätzlich gegen starke Windlasten und Schlagregen gesichert zu werden.

Hierauf ist die Erfindung jedoch nicht beschränkt. Es hat sich überraschenderweise gezeigt, dass die Diffusorschicht auf allen Glasoberflächen des Isolierglaselementes angeordnet sein kann. Es ergibt sich damit eine sehr gute Brillanz der Darstellung.

Erfindungsgemäß ist das Projektionsglaselement nämlich Teil der Fassade selbst, d. h., es ist ein fassadenbündiges Teil der Fassade entweder als Fenster der Fassade oder als Fassadenplatte oder als eine der Fassade vorgehängte Platte.

Hierbei gibt es mehrere verschiedene Möglichkeiten.

In einer ersten bevorzugten Ausgestaltung ist es vorgesehen, dass das Projektionsglaselement als Isolierglasfenster ausgebildet ist und so die Fensteröffnung einer Fassade auskleidet.

Eine herkömmliche Fensteröffnung in der Fassade wird somit als Projektionsfläche verwendet, was - bei nicht benutzter Projektionsfläche - das äußere Aussehen der Fassade in keiner Weise beeinträchtigt. Es bedarf keiner zusätzlichen Baumaßnahmen und es bedarf insbesondere keiner aufwendigen Befestigungen, weil das erfindungsgemäße Projektionsglaselement wie ein herkömmliches Isolierglasfenster mit seinem Rahmen und/oder seinen Punkt- oder Eckhalterungen in die Fensteröffnung einer Fassade eingesetzt wird.

In einer anderen Ausgestaltung der Erfindung ist es vorgesehen, dass das Projektionsglaselement als Fassadenplatte selbst ausgebildet ist und somit bündig in die übrigen, bereits vorhandenen Fassadenplatten eingesetzt ist, um so einen Teil der Fassade zu bilden. Es kann auch einer vorhandenen Fassade vorgehängt werden. Auch wird das Aussehen der Fassade in keiner Weise durch nachträgliches Einbringen des Projektionsglaselementes beeinträchtigt und es bedarf keiner gesonderten Bau- oder Montagemaßnahmen, eine solche Projektionswandfläche als Fassadenplatte in den übrigen Verbund der Fassadenplatten einzupassen oder einer vorhandenen Fassade vorzuhängen.

Für die Halterung eines solchen Projektionsglaselementes an der Fassade eines Gebäudes gibt es eine Vielzahl von Möglichkeiten. Diese Möglichkeiten beziehen sich auf punktförmige Halterungen des Projektionsglaselementes oder auch auf randseitige Halterungen.

Eine bevorzugte Ausführung der Erfindung bezieht sich auf ein Projektionsglaselement in der Form eines Isolierglasaufbaues aus zumindest zwei oder auch mehreren beabstandeten Glaselementen unter Verwendung von zumindest einem ersten Glaselement mit Durchlichtprojektionseigenschaften als auch Auflichtprojektionseigenschaften, das als Raumteilelement (für die Verwendung im Innenbereich eines Gebäudes) oder als Fassadenelement mit den entsprechenden thermischen und akustischen Eigenschaften ausgebildet ist.

Das zumindest zweite Glaselement ist ein VSG-Element oder ein ESG-Element oder ein normales Floatglaselement.
Moderne Fassadenglaskonstruktionen werden aus ESG (Einscheibensicherheitsglas) oder aus VSG (Verbundsicherheitsglas) beziehungsweise aus zwei oder mehr gleich- oder ungleichartig beabstandeten Scheiben aus den genannten Glasscheibenarten beziehungsweise aus Flachglas gebildet.

Derartige Glasscheiben weisen eine Dicke von wenigen mm bis etwa 21 mm auf und bei Isolationsglaskonstruktionen werden bis etwa 20 mm Abstand verwendet. Die Ausführungsformen werden entsprechend den Anforderungen an den Wärmeschutz, den Sonnenschutz, den optischen und gestalterischen Anforderungen, den Schallschutz, den Brandschutz, den Personen und Objektschutz und dergleichen ausgeführt. Es werden auch Kombinationen der genannten Arten verwendet.

Eine übliche Flachglasabmessung beträgt beispielhaft 6,00 x 3,21 Meter und daraus werden die Scheiben für typische Mehrscheiben-Isolierglasaufbauten hergestellt. Durch den Randverbund werden hermetisch abgeschlossene Zwischenräume ausgebildet, die üblicherweise durch ein Edelgas befüllt werden. Dabei wird üblicherweise der Gasdruck entsprechend dem barometrischen Luftdruck am Ort und zum Zeitpunkt der Produktion eingestellt. Es besteht also zum Zeitpunkt der Produktion ein Gleichgewicht zwischen dem Druck in der Verglasungseinheit und dem äußeren barometrischen Druck in der Produktionsumgebung. Es kann auch der Gasdruck durch ein Druckausgleichsventil am Ort der Verwendung eingestellt werden.

Derartige Zweifach-, Dreifach- oder auch Mehrfachisolierglasaufbauten können auch aus Scheiben gebildet werden, die auf einer oder auf beiden Seiten eine Beschichtung aufweisen und derart die Reflexion und/oder Transmission und/oder optische Ausbildung in gewünschten Wellenlängenbereichen des Lichtes beeinflussen. Die einzelnen Scheiben können vorgespannt oder durchgefärbt ausgeführt werden oder aber - wie bereits genannt - aus sogenanntem Sicherheitsglas in Form eines ESG und/oder VSG gebildet werden.

Erfindungsgemäß werden nun derartige Fassadenelemente für eine Durchlichtprojektion als auch Auflichtprojektion verwendet. In einer Weiterbildung der vorliegenden Erfindung wird zumindest ein Glaselement und/oder eine Schicht beziehungsweise ein Teil des Haftverbundes eingefärbt ausgeführt. Dabei kann bei Verwendung eines VSG-Elementes eine der beiden oder beide oder mehrere Glasscheiben eines VSG Elementes eingefärbt werden oder es kann der polymere Haftverbund, bevorzugt in Form eines Polyvinylbutiral (PVB) oder eines Polyvinyl-Alkohol (PVA) oder eines Ethylen-Vinylacetatcopolymeres (EVA) oder eines Terpolymer mit Ethylen-, Vinylacetat- und Vinylalkohol Elementes, eingefärbt werden oder es können Schichten oder Beschichtungen in Form einer Haftmatrix vorgenommen werden, die eingefärbt ausgebildet sein können.

Bevorzugt wird jenes Element eingefärbt ausgeführt, das zum Beobachter am nächsten gelegen ist. Eine bevorzugte Einfärbung wird im dunklen Farbbereich ausgeführt, beispielsweise grau oder dunkelgrau bis schwarz oder dunkelbläulich oder dunkelgrünlich usw. und es kann dadurch bei Tageslicht eine bessere Sichtbarkeit beziehungsweise ein besserer Kontrast erzielt werden. Die optische Dichte für ein derart eingefärbtes Element wird typisch mit 0,05 bis etwa 0,7 angegeben.

Die Erfindung betrifft ein Projektionsglaselement als Isolierscheiben-Aufbau gemäß Anspruch 1. Eine solche Ausbildung hat den Vorteil, eine solche Anordnung unmittelbar in eine Fassade eines Gebäudes integrieren zu können, weil es überlegene Wärmedämmeigenschaften hat. Eine solche Ausführung ist im übrigen nicht auf einen umlaufenden Rahmen angewiesen, denn es werden auch Isolierglas-Konstruktionen beansprucht, die entweder rahmenlos oder mit Punkthaltern gehalten sind.

Bei manchen Fassaden (Kaltglas-Aufbau) - und auch- in der Ausbildung als Raumteiler wird jedoch eine gute Wärmedämmung nicht benötigt. Es reicht dann aus, lediglich ein Glaselement mit den erfindungsgemäßen Maßnahmen zu verwenden.

Da die Oberfläche (Diffusorschicht) im Innenraum eines Isolierglasverbundes angeordnet ist, muss auf eine leichte Reinigbarkeit keine Rücksicht genommen werden, sondern die Optimierung der Projektionseigenschaften kann damit vorrangig beachtet werden.

Eine projizierte Abbildung kann daher von einem Betrachter horizontal und vertikal unter einem großen Beobachtungswinkel wahrgenommen werden.

Die so hergestellte Diffusorschicht wird in der ersten Ausführungsform der Erfindung im Innenraum des Isolierglas-Verbundes aufgenommen und ist damit optimal gegen Verschmutzung geschützt.

Diese einfache Ausführung bezieht sich darauf, dass die beiden Glaselemente aus einfachem Floatglas oder aus einem Einscheibensicherheitsglas (ESG) bestehen.

Wird jedoch eines der beiden Glaselemente oder sogar beide Glaselemente aus einem VSG gefertigt, können gegebenenfalls bei jedem Glaselement zwei zusätzliche Schichten hinzukommen, denn die mittlere Schicht im VSG-Element kann von beiden Seiten her die Diffusorschicht tragen.

Gleiches gilt auch für das projektorferne Glaselement, welches ebenfalls aus einem VSG bestehen kann und demzufolge auch zwei innere Schichten aufweisen kann, von denen jeweils ebenfalls die eine oder die andere Schicht als Diffusorschicht ausgebildet sein kann:
Im äußersten Fall können also beide Glaselemente aus VSG-Elementen bestehen, so dass sich insgesamt acht Oberflächen ergeben, von denen jede wahlweise als Diffusorschicht ausgebildet sein kann. Zusätzlich kann der polymere Haftverbund jedes VSG-Elementes als Diffusorschicht ausgebildet werden.

In einer Weiterbildung der vorliegenden Erfindung wird zumindest ein Element des ersten Glaselementes eingefärbt beziehungsweise sich einfärbend ausgeführt. Dabei kann eine der beiden oder beide oder mehrere Glasscheiben eines Glaselementes eingefärbt werden oder es kann der polymere Haftverbund, bevorzugt in Form eines Polyvinylbutiral (PVB) Elementes, eingefärbt beziehungsweise sich einfärbend ausgebildet werden oder es können Schichten oder Beschichtungen in Form einer Haftmatrix vorgenommen werden, die eingefärbt beziehungsweise einfärbend ausgebildet sein können.

Unter einem PVB-Verbund wird allgemein eine polymere Haftverbundfolie, insbesondere in Form einer Polyvinyl-Butyral (PVB) Folie oder einer Ethylen-Vinylacetatcopolymeres (EVA) oder einer Polyvinyl-Alkohol (PVA) Folie oder einer Terpolymer mit Ethylen-, Vinylacetat- und Vinylalkohol-Einheiten Folie und dergleichen endlich dicken Verbundfolien verstanden.

Bevorzugt wird jenes Element eingefärbt beziehungsweise einfärbend ausgeführt, das zum Beobachter am nächsten gelegen ist. Eine bevorzugte Einfärbung wird im dunklen Farbbereich ausgeführt, beispielsweise grau oder dunkelgrau bis schwarz oder dunkelbläulich oder dunkelgrünlich usw. und kann dadurch bei Tageslicht eine bessere Sichtbarkeit beziehungsweise ein besserer Kontrast erzielt werden. Die optische Dichte für ein derart eingefärbtes Element wird mit 0,05 bis etwa 0,7 angegeben.

In einer weiteren Ausbildung der vorliegenden Erfindung kann nunmehr diese Einfärbung photochrom oder thermochrom ausgeführt werden und es kann dadurch bei größerer Umgebungshelligkeit durch eine Nachdunkelung zumindest eines VSG-Elementes eine Verbesserung der Sichtbarkeit beziehungsweise des Kontrastes bei heller Umgebung erreicht werden und dieser Vorgang kann bei Verwendung einer thermochromen Schicht bewusst manuell oder automatisch geschaltet werden.

Die vorliegende Erfindung beruht daher auf der kostengünstigen Herstellung großformatiger Projektionsglaselemente in der Form eines Isolierglasaufbaues und der Verwendung weitgehend bekannter und erprobter Fertigungstechniken. Die kostengünstige Herstellung der diffusen Oberfläche für einen nahezu isotropen, großen horizontalen und vertikalen Beobachtungswinkel wird in einer ersten Ausführungsform durch eine Mattierung der Glasoberfläche erreicht, wobei idealerweise eine hexagonal oder rechteckförmige oder dreieckförmige kreisförmige oder zufällig angeordnete linsenstrukturartige Oberfläche erzeugt wird.

Da diese Oberfläche im Innenraum eines Isolierglasverbundes angeordnet ist, muss auf eine leichte Reinigbarkeit keine Rücksicht genommen werden, sondern die Optimierung der Projektionseigenschaften kann damit vorrangig beachtet werden.

Diese diffuse Oberfläche wird also bevorzugt auf der beobachtungsseitigen Oberfläche des Glaselementes ausgeführt und kann dabei durch eine Art Sandstrahlen mit entsprechenden oberflächenbearbeitenden Teilchen in Form von Glaskügelchen oder korundartigen Teilchen oder Walnusskernen oder Kirschkernen und dergleichen erfolgen. Dabei kann durch die spezielle Strahltechnik und Wahl der Strahlmaterialien und deren Durchmesser und des Strahldruckes und der Dauer der Bestrahlung eine diffuse Oberfläche erzeugt werden, die eine nahezu isotrope Strahlcharakteristik aufweist. Eine projizierte Abbildung kann daher von einem Betrachter horizontal und vertikal unter einem großen Beobachtungswinkel wahrgenommen werden.

Die beobachtungsseitige Oberfläche des VSG-Glaselementes kann mit einer transparenten bis transluzenten und bevorzugt eingefärbten Beschichtung versehen werden, in die Glaskügelchen oder Glashohlkügelchen eingestreut werden. Derartige Methoden werden bei Straßenmarkierungen angewendet und wird dabei eine zum Beispiel weiße Farbe über eine Maskierung auf die Fahrbahnoberfläche gesprüht und anschließend werden ich die noch nicht ausgehärtete Farbe Glasperlen mit einem geeigneten Durchmesser und einem optimierten Brechungsindex oder einer Mischung aus unterschiedlichen Brechungsindices eingestreut.

Der Überschuss an Glasperlen wird nach dem Trocknungsvorgang entfernt und es bleibt eine Art Monolage an Glasperlen oder auch mehrere Lagen an Glasperlen, wobei der retroreflektive Effekt durch zumindest teilweise nicht bedeckte Glasperlenoberflächensegmente entsteht.

In der Ausbildung einer derartigen Glasperlenoberfläche im Innenraum eines Isolierglasverbundes kann auf die Forderung nach leichter Reinigbarkeit verzichtet werden, da im Innenraum eines Isolierglasverbundes im normalen Funktionszustand keine Verschmutzung und kein Wasserdampfniederschlag gegeben ist.

Die Haftmatrix für eine derartige Glasperlenoberfläche kann aus einem Polymer mit geeigneten Hafteigenschaften auf Glas, beispielsweise Polyvinylbutiral (PVB) oder Ethylen-Vinylacetalcopolymere, und weiteren physikalischen Eigenschaften, wie der Alterungsbeständigkeit und dergleichen gewählt werden und muss entweder gut transparent ausgeführt sein oder entsprechend gefärbt ausgeführt sein oder kann auch photochrom oder thermochrom ausgerüstet sein.

Übliche Trocknungstemperaturen für eine derartige polymere Haftmatrix liegen üblicherweise unterhalb 250°C und können daher an einem fertigen VSG-Element kostengünstig hergestellt werden.

Die Dicke der polymeren Haftmatrix-Schicht beziehungsweise die Nassauftragsschichtstärke muss auf den mittleren Durchmesser d50 der Glasperlen abgestimmt werden und kann einige 5 bis 50 µm, bevorzugt 10 µm bis 30 µm betragen und kann mittels Siebdruck oder Vorhanggießen oder mittels Rollenbeschichtung oder mittels Rakelbeschichtung oder mittels Sprühbeschichtung und dergleichen Beschichtungsverfahren erfolgen.

Bei der Verwendung einer eingefärbten Haftmatrix wird in einer ersten Herstellvariante darauf geachtet, dass beim Auftragen beziehungsweise Aufstreuen der Glasperlen diese durch lhr Eigengewicht und die gewählte Viskosität der Haftmatrix auf die Glasoberfläche absinken und derart mit der Glasoberfläche in Berührung kommen oder es werden die Glasperlen mit einer Andruckwalze oder in einer weiteren Herstellvariante beim Pressvorgang im Autoklav leicht eingepresst bis die Mehrzahl der Glaskügelchen oder Glashohlkügelchen die Glasoberfläche punktuell berühren.

Damit wird ein Projektionsstrahl weitgehend ungehindert von der eingefärbten oder der sich einfärbenden Haftmatrix diese diffuse Beschichtung durchdringen und im Glaskügelchen gestreut werden. Als bevorzugte Anordnung wird dabei die freie Seite der Glaskügelchen zum Projektor ausgerichtet werden, da hier eine größere Eintrittsfläche gegeben ist und umgekehrt die andere beobachterseitige Schicht einen großflächigeren abgedunkelten Anteil aufweist und derart eine Betrachtung bei hellem Umgebungslicht effizienter ist.

Neben der Verwendung einer polymeren Haftmatrix kann eine Glasfritten-oder Lotglas-Beschichtung verwendet werden. Dabei muss darauf geachtet werden, dass derartige anorganische transparente oder bevorzugt eingefärbte und ganz besonders neutral grau ausgebildete Schichten eine für den VSG-Herstellprozess und für die Beständigkeit der Glaskügelchen niedere Verfahrenstemperatur aufweisen und zumindest im Bereich von 620°C angewendet werden und bevorzugt unterhalb 500°C verwendet werden und ganz besonders unterhalb 400°C verwendet werden und die thermischen Ausdehnungskoeffizienten vergleichbar sind, sodass kein Ablöseprozess bei Veränderung der Temperatur eines VSG-Verbundes auftreten kann. Grundsätzlich können derartige anorganische Haftmatrix-Systeme ebenfalls photochrom oder thermochrom eingestellt werden und werden dazu beispielsweise feine Pigmente aus photochromen oder thermochromen Glas mit einem mittleren Durchmesser von 1 µm bis 30 µm, bevorzugt 1 µm bis 10 µm und entsprechender Temperaturbeständigkeit verwendet.

In einer weiteren Ausführungsform der vorliegenden Erfindung wurde gefunden, dass der soeben beschriebene Einbau der Glaskügelchen beziehungsweise Glashohlkügelchen als Streuzentrum und damit als Diffusorquelle in Verbindung mit einem PVB-Verbund kostengünstig und mit gutem Effekt ausgeführt werden kann.

In dieser Ausbildung der Integration von Glaskügelchen in den PVB-Verbund wird eine etwa 5 bis 50 µm dicken polymeren transparenten oder eingefärbten Schicht auf beispielsweise die Oberfläche eines Glases oder eine 380 µm dicke PVB-Folie abgeordnet.

Dies kann mittels Siebdruck oder Vorhanggießen oder mittels Rollenbeschichtung oder mittels Rakelbeschichtung oder mittels Sprühbeschichtung und dergleichen Beschichtungsverfahren erfolgen. Anschließend werden die Glaskügelchen auf die noch nicht getrocknete Beschichtung gebracht und je nach Verfahren sinken diese bis auf die Glas- beziehungsweise PVB-Oberfläche hindurch oder können leicht angedrückt werden. Je nach gewünschter Dichte können die Glaskügelchen im Überschuss oder exakt dosiert für eine gewünschte Dichte beziehungsweise Bedeckung aufgebracht werden und es muss gegebenenfalls der Überschuss an Glasperlen nach der Trocknung beziehungsweise Antrocknung entfernt werden. Erfindungsgemäß wurde weiters ermittelt, dass je nach Größe des Projektionsglaselementes und des Abstandes der Beobachtung Glasperlen beziehungsweise Glashohlkügelchen von wenigen µm-Durchmesser bis zu 500 µm und bis zu 2 mm Durchmesser verwendet werden können. Ja nach der Wahl der Glasperlendurchmesser können auch mehrere Haftverbundfolien verwendet werden. Durch das hervorragende Fliesverhalten und das hervorragende Haftvermögen auf Glasoberflächen erfolgt ein weitgehend luftbläschenfreie Verbindung mit guten Hafteigenschaften. Diese Hafteigenschaften müssen dabei nicht jene Eigenschaften erfüllen, die bautechnisch an ein VSG-Element gestellt werden. Es werden damit üblicherweise VG-Elemente, also Verbund-Glas-Elemente erzeugt.

Die Anordnung der polymeren Haftmatrix mit den Glaskügelchen kann auf einer Glasscheibe oder einer PVB-Folie projektorseitig oder beobachterseitig ausgeführt werden. Für eine Tageslichtprojektion wird die Anordnung beobachterseitig und eingefärbt bevorzugt.

Die Einfärbung dieser Haftmatrix kann photochrom oder thermochrom erfolgen, wobei bei organischen Additiven auf die Lichtechtheit geachtet werden muss und gegebenenfalls bei hoher Sonnenbelastung auch anorganische photochrome oder thermochrome Pigmente verwendet werden können. Beispielsweise kann ein photochromes Sonnenbrillenglas oder Abfall aus deren Produktion zur Herstellung von feinen 1 µm bis 30 µm und bevorzugt 1 µm bis 10 µm Pigmenten verwendet werden und können derartige feine Pulver der Haftmatrix beigemengt werden.

Es kann jedoch auch eine eingefärbte PVB-Folie verwendet werden. Weiters ist die Erfindung nicht auf die Verwendung von ein oder zwei PVB-Folien mit typisch 380 µm beschränkt, sondern es können drei oder mehr PVB-Folien verwendet werden. Grundsätzlich kann die eingefärbte bzw. sich einfärbende Haftmatrix auf der beobachtungsseitigen Glasseite angeordnet werden und werden dann die Glaskügelchen aufgebracht, und es wird dann die projektorseitige Glasseite mit einer transparenten Haftmatrix versehen, danach werden beide Gläser vorverbunden und in einem Laminator, beispielsweise einem Autoklavlaminator, endverbunden. Als Haftmatrix können beispielsweise PVB-Beschichtungen verwendet werden, die einen bekannt guten Haftverbund zu Glasoberflächen ermöglichen, und auf diese Weise kann auch ein guter Haftverbund zu den etwa halbseitig unbedeckten Glaskügelchen hergestellt werden.

Die Erfindung ist auch nicht auf die Verwendung von PVB-Folien beschränkt, sondern können andere VSG-Verbundpolymere wie PVA oder EVA oder PC oder PVC und dergleichen verwendet werden und es kann anstelle der Folien-Autoklav-Lamination auch ein Gießverfahren eingesetzt werden.

In einer weiteren Ausbildung der Integration von Glaskügelchen oder Hohlglaskügelchen in den PVB-Verbund wurde gefunden, dass bei optimaler Wahl des Brechungsindex (bevorzugt 1,6 bis 1,7) der Glaskügelchen beziehungsweise der Hohlglaskügelchen abgestimmt auf den Brechungsindex der Haftverbundfolie, insbesondere der PVB-Folie, eine Extrusion beziehungsweise auch Koextrusion der Haftverbund-Folie mit im Volumen gleichmäßig verteilten Glaskügelchen eine sehr kostengünstige und wirksame Herstellmethode ist.

Allerdings muss hierbei eine entsprechende Fertigungslosgröße mit größerer Menge gegeben sein, da ein Extrusionsvorgang nicht für kleine Mengen kostengünstig ausgeführt werden kann. Eine Koextrusion kann beispielsweise eine eingefärbte und eine nichteingefärbte HaftverbundSchicht mit integrierten Glaskügelchen aufweisen.

Der Anmelder hat in Versuchen festgestellt, dass komplett eingebettete Glaskügelchen von 30 bis 100 µm mit 1,6 bis 1,7 Brechungsindex in eine Glasfritte und das alles auf einem eingefärbten Glas bei etwa 620°C eingebrannt, eine etwas milchige Beschichtung ergibt und einen nahezu isotropen Beobachtungswinkel von etwa 180° ermöglicht. Im direkten Vergleich zu Sand- oder Glaskügelchen-bestrahlten oder satinierten Glasoberflächen büßt eine derartige Projektionsglaswand bei einer 90°-senkrechten Beobachtung an Helligkeit ein, bietet aber über den gesamten Beobachtungswinkel ein brillantes Bild. Das entspricht auch der physikalischen Erklärung, denn je größer der Beobachtungswinkel gewählt wird, umso geringer wird die Leuchtdichte.

Die kostengünstigste Projektionsglaswand ist nunmehr die Verwendung eines Weißglases (Solarglas bzw. Eisenoxid-armes Glas; Glas mit einer Transparenz größer 90 bzw. 92%) mit einer ESG-Behandlung (Wärmebehandlung); damit wird ein Floatglas ein ESG-Glas (bricht in kleine Stückchen) und der außen liegenden Glasfritten-Glaskügelchen Matrixbeschichtung. Diese ist temperaturbeständig und reinigbar und es wird keine Entspiegelung benötigt.

Die Erfindung beansprucht nach dem ersten Ausführungsbeispiel halb in eine Haftmatrix eingebettete Glaskügelchen und nach dem soeben beschriebenen Ausführungsbeispiel auch voll in eine Haftmatrix eingebetteten Glaskügelchen. Die Glaskügelchen können Vollkörper oder auch Hohlkörper sein.

Solche voll eingebetteten Glaskügelchen in einer Glasfritte können extrem einfach und kostengünstig hergestellt werden. Und die Glasfritte kann zusätzlich noch mit photochromen Eigenschaften ausgerüstet werden.

Die Erfindung ist nicht auf einen Isolierglas-Aufbau mit einem zwischen den Glaselementen angeordneten Luftzwischenraum beschränkt. Alle in dieser Beschreibung dargestellten Ausführungsbeispiele beziehen sich auch darauf, dass die Glaselemente unmittelbar aneinander angrenzen und der dazwischen liegende Luftzwischenraum (sofern beschrieben oder dargestellt) entfällt.

Die Erfindung wird nun anhand mehrerer Ausführungsbeispiele näher beschrieben. Hierbei gehen aus den Zeichnungen und ihrer Beschreibung weitere Vorteile und Merkmale hervor.

Dabei zeigt:
**Figur 1****:** schematisiert ein Schnitt durch ein Gebäude mit einer Fassade, in der ein Projektionsglaselement eingesetzt ist
**Figur 2****:** eine gegenüber Figur 1 abgewandelte Ausführungsform
**Figur 3****-****Figur 9****:** unterschiedliche Möglichkeiten der Halterung eines Projektionsglaselementes, jeweils schematisiert dargestellt
**Figur 10****-** **Figur 13**: unterschiedliche Ausführungsformen in teilweiser Schnittdarstellung für Lagerungen des Projektionsglaselementes an der Fassade
**Figur 14** eine schematische Darstellung einer erfindungsgemäßen Anordnung in geschnittener Ansicht, wobei als zweites Glaselement (3) ein einfaches Floatglaselement oder ein ESG Element verwendet wird und
**Figur 15** eine schematische Darstellung einer erfindungsgemäßen Anordnung in geschnittener Ansicht, wobei als zweites Glaselement (3) ein VSG Element verwendet wird,
**Figur 16**: schematisiert ein Schnitt durch ein Gebäude mit einer Fassade, in der ein Projektionsglaselement eingesetzt ist
**Figur 17****:** eine gegenüber Figur abgewandelte Ausführungsform
**Figur 18** eine schematische Darstellung einer erfindungsgemäßen Anordnung in geschnittener Ansicht, wobei als zweites Glaselement (3) ein einfaches Floatglaselement oder ein ESG Element verwendet wird und
**Figur 19** eine schematische Darstellung einer erfindungsgemäßen Anordnung in geschnittener Ansicht, wobei als zweites Glaselement (3) ein weiteres VSG Element verwendet wird,
**Figur 20****:** eine schematische Darstellung einer erfindungsgemäßen Anordnung in geschnittener Ansicht, wobei die diffuse Struktur (12) durch Glasperlen (19) und eine Haftmatrix (20) gebildet wird,
**Figur 21a****:** eine schematische Darstellung einer Anordnung in geschnittener Ansicht, wobei die diffuse Struktur (12) durch eine linsenartige Struktur (21) gebildet wird.
**Figur 21b****:** eine schematische Darstellung des Schnittes einer linsenartige Struktur (21),
**Figur 21c****:** eine schematische Darstellung der linsenartige rechteckartigen Struktur (21 a) in Draufsicht,
**Figur 21d****:** eine schematische Darstellung der linsenartige dreieckartigen Struktur (21 b) in Draufsicht,
**Figur 21e**: eine schematische Darstellung der linsenartige kreisförmigen Struktur (21 c) in Draufsicht,
**Figur 22a****:** eine schematische Darstellung einer erfindungsgemäßen Anordnung in geschnittener Ansicht, wobei die diffuse Struktur (19, 20, 22, 23) im VSG-Element (2) integriert ist und auf der projektorseitigen PVB-Folie (22) angeordnet ist,
**Figur 22b****:** eine schematische Darstellung einer erfindungsgemäßen Anordnung in geschnittener Ansicht, wobei die diffuse Struktur (19, 20, 22, 23) im VSG-Element (2) integriert ist und auf der beobachtungsseitigen PVB-Folie (23) angeordnet ist,
**Figur 23****:** eine schematische Darstellung einer erfindungsgemäßen Anordnung in geschnittener Ansicht, wobei die diffuse Struktur (19, 20, 22, 23) im Vag-Element (2) integriert ist und extrusionstechnisch matrixartig in der PVB-Folie (23) enthalten ist.
**Figur 24**: eine schematische Darstellung einer erfindungsgemäßen Anordnung in geschnittener Ansicht, wobei die diffuse Struktur (19, 20, 22, 23) im VSG-Element (2) integriert ist und auf der dem Projektor (8) zugewandten Oberfläche des Glaselementes (7) angeordnet ist,
**Figur 25****:** eine schematische Darstellung einer erfindungsgemäßen Anordnung in geschnittener Ansicht, wobei die diffuse Struktur (19, 20, 22, 23) im VSG-Element (2) integriert ist und auf der dem Projektor (8) zugewandten Oberfläche des Glaselementes (7) angeordnet ist und die Haftmatrix (20) thermochrom ausgebildet ist und eine elektrisch beheizbare transparente dünne Schicht (24) mit zwei an entgegengesetzten Kanten befindlichen Anschlüssen (25, 26) mit elektrischer Energie versorgt werden kann.
**Figur 26****:** Schnitt durch eine weitere Ausführung mit zwei unmittelbar miteinander verbundenen Glaselementen ohne Luftzwischenraum
**Figur 27****:** Schnitt durch eine weitere Ausführungsform mit zwei unmittelbar miteinander verbundenen Glaselementen, bei denen die Glaskugeln als Kugelhaufen (Schüttung) in einem Zwischenraum eingefüllt sind.

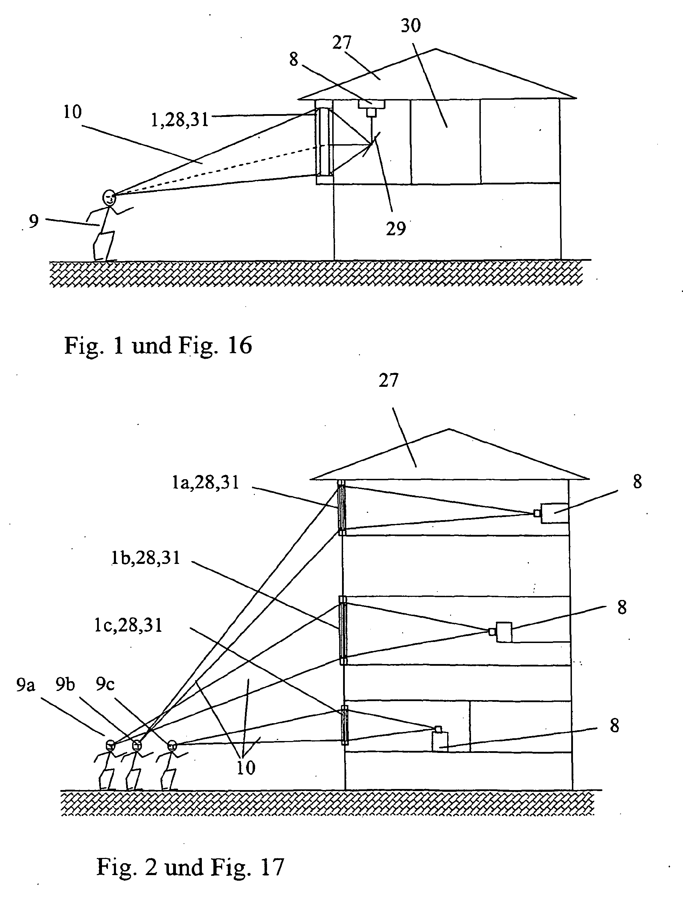

In **Figur 1** ist als erstes Ausführungsbeispiel dargestellt, wie ein Projektionsglaselement 1 als Fensterelement 28 oder als Fassadenelement 31 in einem Gebäude 27 an der Außenwand eingebaut ist.

Hierbei wird angenommen, dass in einem Gebäuderaum 30 ein Projektor 8 angeordnet ist, der über einen Spiegel 29 den Projektionsstrahl auf die Innenseite des Projektionsglaselementes 1, 28, 31 lenkt.

Der vor oder in (nicht gezeichnet) dem Gebäude stehende Beobachter 9 kann nun im Bereich seines Betrachtungswinkels 10 eine brillante und abbildungsscharfe Projektion auf dem Projektionsglaselement wahrnehmen. Es kann jedoch ebenso der Projektor 8 außen angeordnet werden und der Beobachter 9 kann sich wahlweise außen oder innen befinden.

Die **Figur 2** zeigt ein anderes Gebäude 27, in dem unterschiedliche Projektionsglaselemente 1 a, 1 b, 1 c angeordnet sind, die jeweils ebenfalls wahlweise als Fensterelemente 28 und/oder als Fassadenelemente 31 ausgebildet sein können.
In diesem Fall erfolgt die Projektoranbringung unmittelbar im jeweiligen Raum des Gebäudes 27 selbst.

Die an unterschiedlichen Beobachtungsorten stehenden Beobachter 9a, 9b, 9c können so alle projizierten Informationen auf den unterschiedlichen Projektionsglaselementen 1 a, 1b, 1 c wahrnehmen.

Wichtig an den beiden Darstellungen ist, dass die Projektionsglaselemente 1 a, 1 b, 1 c Teil der Fassade selbst sind und nicht der Fassade vorgehängt sind oder durch zusätzliche Montagemittel an der Fassade befestigt werden müssen.
Wie bereits in Figur 1 genannt, kann der Projektor 8 innenseitig oder außenseitig angeordnet werden und kann sich der Beobachter 9 wahlweise innen oder außen befinden und kann derart eine Beobachtung innen oder außen erfolgen.

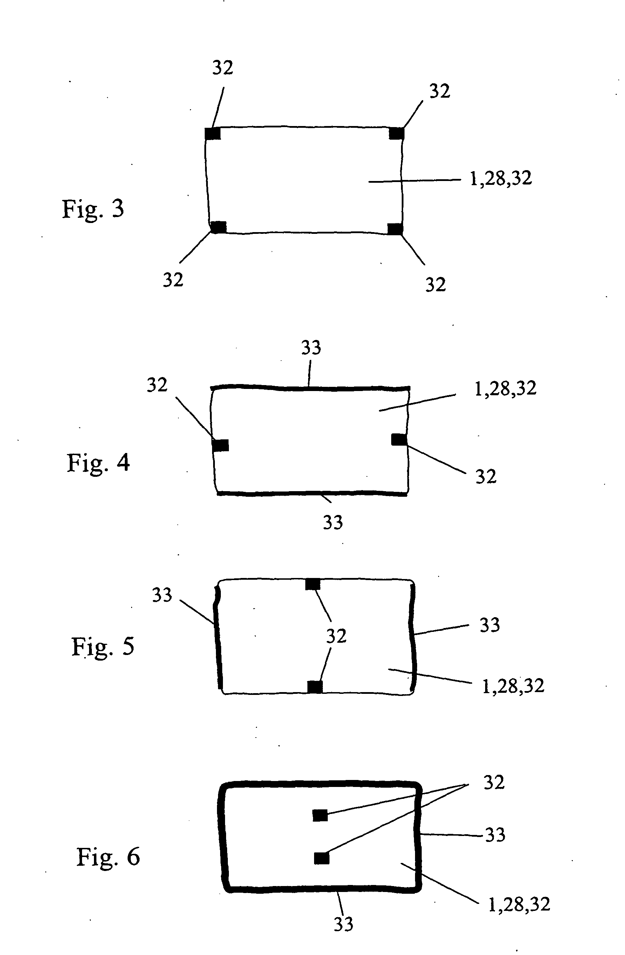

Die **Figuren 3 bis 9** zeigen deshalb einige mögliche Lagerungen der Projektionsglaselemente 1 a, 1b, 1 c.

In **Figur 3** ist dargestellt, dass ein solches scheibenförmiges Projektionsglaselement 1 mit Hilfe von eckenseitigen Lagerpunkten 32 an einer Fassade befestigt werden kann.

Die **Figuren 4 bis 6** zeigen unterschiedliche Kombinationen untereinander. In Figur 4 ist dargestellt, dass der Isolierscheibenaufbau mit horizontalen Lagerkanten 33 und vertikalen punktförmigen Lagerpunkten 32 gehalten werden kann.

Die Umkehrung ist in **Figur 5** dargestellt, bei der vertikale Lagerkanten 33 und übereinander liegende Lagerpunkte 32 dargestellt sind. Die **Figur 6** zeigt die Vereinigung beider Lagermöglichkeiten nach den Figuren 4 und 5, wo ein umlaufender Rahmen mit umlaufenden Lagerkanten 33 und innenliegenden Lagerpunkten 32 gezeigt ist.

Ein solcher Aufbau wird insbesondere für sehr große Projektionsglaselemente, beispielsweise im Bereich von 3 x 6 Metern vorgesehen werden.

Bei derartigen Projektionsglaselementen geht es darum, eine optimale Lagerung zu schaffen, die verhindert, dass sich die Projektionsglaselemente als Isolierscheibenaufbau unzulässig durchbiegen, verwerfen oder gar unter dem Eigengewicht brechen. Es müssen auch hohe thermische Lasten aufgenommen werden, weil derartige Projektionsglaselemente an der Außenseite von Fassaden bis zu Temperaturen von 70 °C aufgeheizt werden können und andererseits auch tiefe Frosttemperaturen überstehen müssen.

Hier setzt die Erfindung ein, die vorsieht, die bewährte Technik von Isolierscheiben auf ein Projektionsglaselement zu übertragen, um so verzugsfrei hohe Wärmelasten bei niedrigem Montageaufwand und hoher Lebensdauer zu bewältigen.

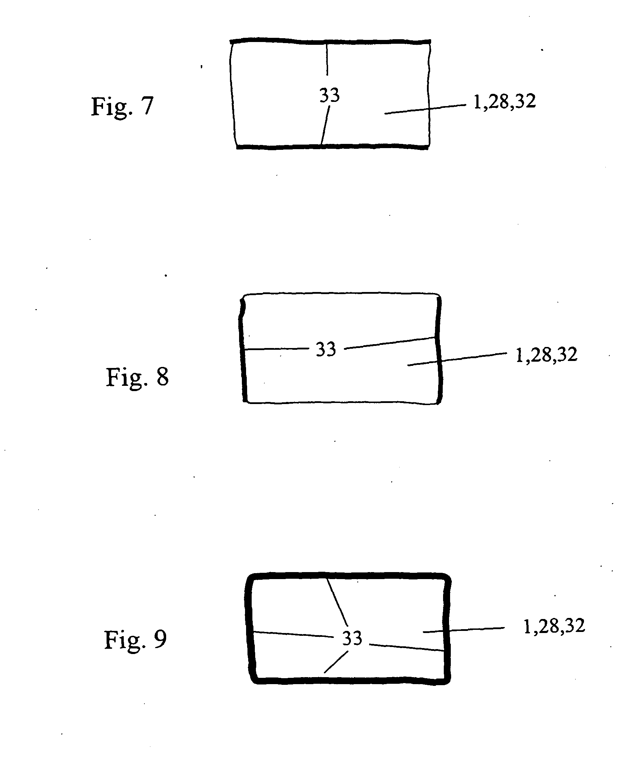

Die **Figuren 7 bis 9** zeigen weitere Lagerungsmöglichkeiten für einen Isolierglasaufbau, wo in Figur 7 und 8 erkennbar ist, dass die randseitigen Lagerkanten 33 entweder nur horizontal oder nur vertikal angeordnet werden können oder - gemäß Figur 9 - auch umlaufend ausgebildet sein können.

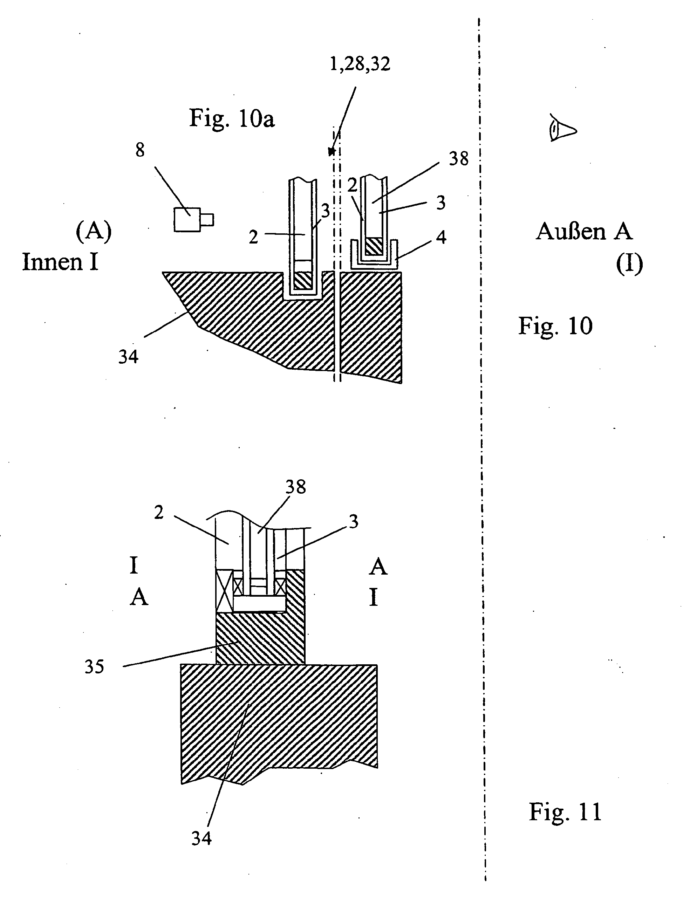

Die **Figuren 10 bis 13** zeigen verschiedene Lagerungen der Isolierglasscheiben, wobei in Figur 10a) erkennbar ist, dass in einer Nut einer Wandöffnung beziehungsweise einer Laibung 34 ein Isolierglaselement 2, 38, 3 eingebaut ist oder in Figur 10b) direkt mittels Lagerungselement 4 ein Isolierglaselement 2, 38, 3 aufgesetzt ist.

In allen Darstellungen ist durch die Angabe der Buchstabenfolge A-I auf der Projektorseite und I-A auf der Beobachterseite kenntlich gemacht, dass so angegebenen die Verhältnisse von "außen" - nächst dem Beobachter 9 - und "innen" - nächst dem Projektor 8 auch analog austauschbar sind.

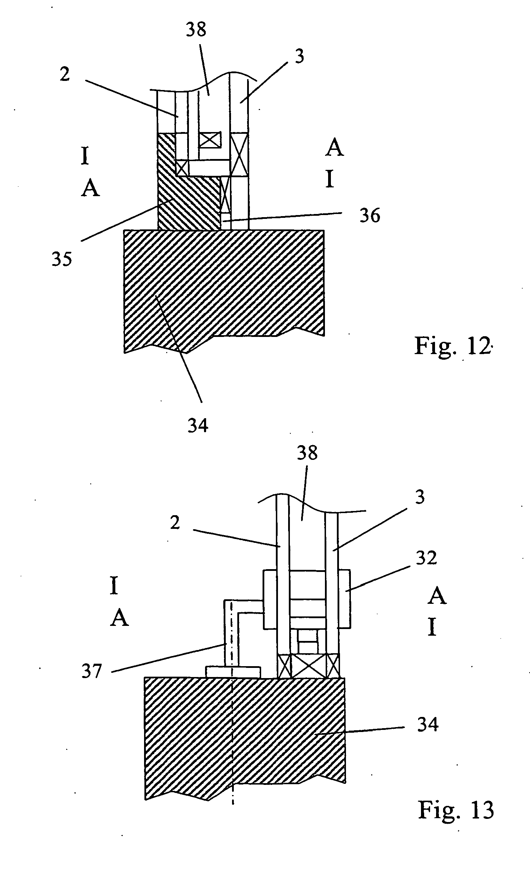

In **Figur 12** ist dargestellt, dass die beiden Glaselemente 2 und 3 auch in einen Rahmen 35 eingeklebt werden können, wobei Klebeflächen 36 erkennbar sind.

Die **Figur 13** zeigt einen Halter 37, der aus einem abgekröpften Winkelarm besteht, der mittels Befestigungsmitteln auf der Wandöffnung 34 befestigt ist und der als punktförmige Halterung die vorher erwähnten Lagerpunkte 32 trägt, um so eine rahmenlose punktgehaltene Lagerung der beiden Glaselemente 2, 3 zu ermöglichen.

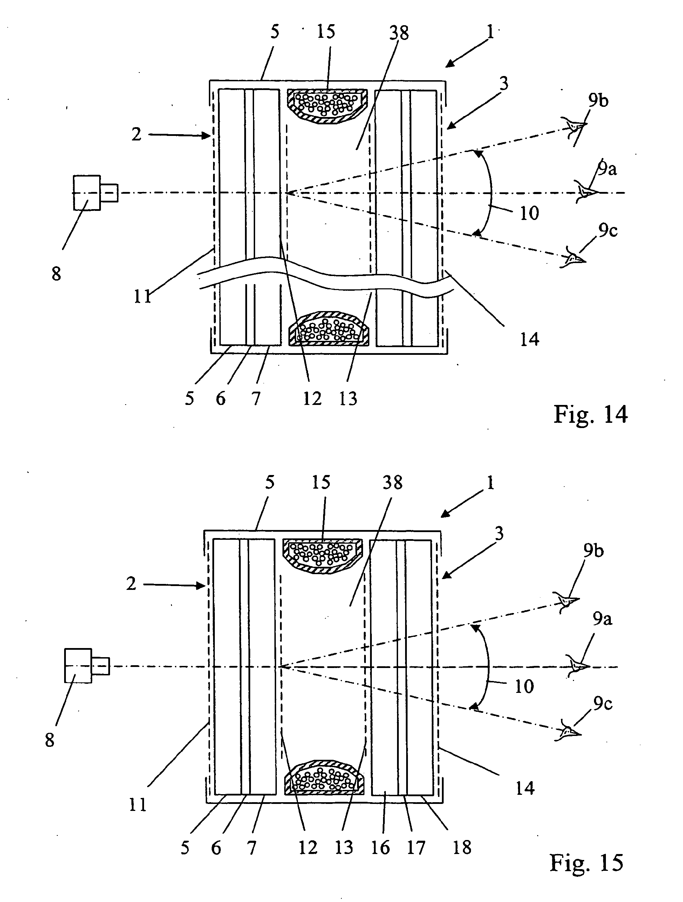

In **Figur 14** wird eine Anordnung in geschnittener Ansicht dargestellt, wobei als zweites Glaselement (3) ein einfaches Floatglaselement oder ein ESG Element verwendet wird. In dieser Ansicht wird eine schematische Systemdarstellung eines Isolierglasaufbaus (1) unter Verwendung von zwei Glaselementen (2, 3) mit einem Abstandsprofil (15) und einem Rahmen (4) mit einem Projektor (8) und einem Beobachter (9a,b,c) skizziert.

Der Projektor (8) kann ein normaler Dia-Projektor bis zu einem digital ansteuerbaren Beamer auf Basis von beispielsweise DMD-Elementen oder LCD-Penta-Prisma Systemen sein und muss für entsprechende Großbildprojektionen eine entsprechend große Lichtleistung bieten und wird üblicherweise einen entsprechend großen Abstand von dem Projektionsglaselement (1) haben. Allerdings wird im Randbereich der Projektorfläche (1) der Projektorstrahl nicht senkrecht auftreffen, sondern unter einem entsprechenden Winkel.

Das projektornahe VSG-Element (2) muss Durchlichtprojektionseigenschaften als auch Auflichtprojektionseigenschaften aufweisen und wird aus zumindest zwei Glasscheiben (5, 7) mit dazwischen angeordnetem polymeren Haftverbund (6) aus zumindest einer PVB- oder PVA- oder EVA- Folie oder dergleichen Folienmaterialien oder zumindest einer Haftmatrix-Anordnung im Beschichtungsverfahren gebildet. Die Glasscheiben (6, 7) können aus einfachem Floatglas als auch aus Einscheibensicherheitsglas (ESG) ausgeführt werden. Bevorzugt wird dafür so genanntes Weißglas, also Glas mit einer hohen Transparenz.für sichtbares Licht im Bereich von üblicherweise größer 90% verwendet. Es kann ein Glaselement 2, 3 oder eine Beschichtung oder eine polymere Haftverbundschicht in einer eingefärbten oder einfärbenden Ausführung verwendet werden.

Das VSG-Element (2) kann auf der projektorseitigen Oberfläche 11 mit einer antireflektierenden Beschichtung versehen werden. Diese Oberfläche 11 kann auch seidenmatt satiniert ausgebildet werden, was jedoch etwas Helligkeit kostet.

Die beobachtungsseitige Oberfläche (12) des VSG-Elementes (2) kann als Diffusorelement ausgebildet werden und unterliegt dadurch keiner Verschmutzung, da im Innenbereich einer Isolierverglasung üblicherweise Edelgas ist und kein Wasserdampf einen Niederschlag bewirken kann. Alternativ zur Anordnung der Diffusorstruktur auf der Oberfläche (12) kann die Diffusorstruktur in den PVB-Verbund (6) integriert werden.

Unter einem PVB-Verbund wird allgemein eine polymere Haftverbundfolie, insbesondere in Form einer Polyvinyl-Butyral (PVB) Folie oder einer Ethylen-Vinylacetatcopolymeres (EVA) oder einer Polyvinyl-Alkohol (PVA) Folie oder einer Terpolymer mit Ethylen-, Vinylacetat- und Vinylalkohol-Einheiten Folie und dergleichen endlich dicken Verbundfolien verstanden.

Das VSG-Element (2) wird in einer üblichen Isolierglasausführung mittels Abstandshaltern (15) mit im Hohlraum befindlichem Trocknungsmittel, beispielsweise Zeolith-Granulat zur Adsorption von Wasserdampf und nicht gezeichneten thermoplastischen Dichtstoffmassen, beispielsweise Polyisobutylen oder Polysulfid-Polymeren mit einem zweiten Glaselement (3) zu einer Einheit verbunden.

Das zweite Glaselement (3) kann eine Reflexionen reduzierende oder vermeidende Beschichtung (14) aufweisen und kann eine weitere funktionale Beschichtung (13) aufweisen.

Selbstverständlich können auch dreiglasige Isolierglasaufbauten verwendet werden und es kann bei Verwendung eines entsprechend dicken PVB- oder PVA- oder EVA- Verbundes (6) von zum Beispiel 3 oder mehr typisch 380 µm dicken PVB-Einzelfolien und einem dreiglasigen VSG-Aufbau auch dieser VSG-Aufbau als Isolierglasaufbau in eine Fassade integriert werden.

Die Beobachtung (9a, b, c) wird entsprechend der Größe des Projektionsglaselementes (1) aus einer normalerweise größeren Entfernung erfolgen, wobei im Gegensatz zur Forderung bei TFT-Bildschirmen nicht zwangsweise 140° bis 176° Blickwinkel (10) gefordert werden, allerdings doch zumindest 40° und nach Möglichkeit bis 60° und wenn gewünscht darüber, wobei üblicherweise die Helligkeit bei größerem Betrachtungswinkel abnimmt.

In **Figur 15** ist eine Anordnung in geschnittener Ansicht dargestellt, wobei als zweites Glaselement (3) ein VSG Element verwendet wird. Diese Darstellung soll nur aufzeigen, dass anstelle eines einfachen Floatglases oder Einscheiben-Sicherheits-Glases nach Figur 14 auch eine VSG-Konstruktion bestehend aus einem inneren Glas (16), einem polymeren Haftverbund (17) und einem äußeren Glaselement (18) verwendet werden kann. Weitere Varianten auf Basis der Verwendung von drei oder mehr Glaselementen wurden nicht zeichnerisch angeführt, sind jedoch je nach Anforderung an die Multifunktionalität eines Projektions-IsolierglasElementes (1) sinnvoll und möglich.

Bei dem zweiten Ausführungsbeispiel, bei dem die Diffusorschicht entweder als äußerte Schicht auf der dem Projektor oder dem Beobachter zugewandten Seite angeordnet ist, entfallen dann die entspiegelten Schichten 14 und eventuell auch die Schicht 13.

In **Figur 16** ist dargestellt, wie ein Projektionsglaselement 1 als Fensterelement 28 oder als Fassadenelement 31 in einem Gebäude 27 an der Außenwand eingebaut ist.

Hierbei wird angenommen, dass in einem Gebäuderaum 30 ein Projektor 8 angeordnet ist, der über einen Spiegel 29 den Projektionsstrahl auf die Innenseite des Projektionsglaselementes 1, 28, 31 lenkt.

Der vor dem Gebäude stehende Beobachter 9 kann nun im Bereich seines Betrachtungswinkels 10 eine brillante und abbildungsscharfe Projektion auf dem Projektionsglaselement wahrnehmen. Der Beobachter 9 kann jedoch ebenso gut im Gebäudeinnenraum 30 sein und derart wäre eine Auflichtprojektion gegeben und der Projektor 8 kann außerhalb des Gebäudes angeordnet werden, wobei bei Beobachtung von Außen eine Auflichtprojektion gegeben ist.

Die **Figur 17** zeigt ein anderes Gebäude 27, in dem unterschiedliche Projektionsglaselemente 1 a, 1 b, 1 c angeordnet sind, die jeweils ebenfalls wahlweise als Fensterelemente 28 und/oder als Fassadenelemente 31 ausgebildet sein können.

In diesem Fall erfolgt die Projektoranbringung unmittelbar im jeweiligen Raum des Gebäudes 27 selbst.

Die an unterschiedlichen Beobachtungsorten stehenden Beobachter 9a, 9b, 9c können so alle projizierten Informationen auf den unterschiedlichen Projektionsglaselementen 1a, 1b, 1c wahrnehmen.

Wichtig an den beiden Darstellungen ist, dass die Projektionsglaselemente 1 a, 1 b, 1 c Teil der Fassade selbst sind und nicht der Fassade vorgehängt sind oder durch zusätzliche Montagemittel an der Fassade befestigt werden müssen.

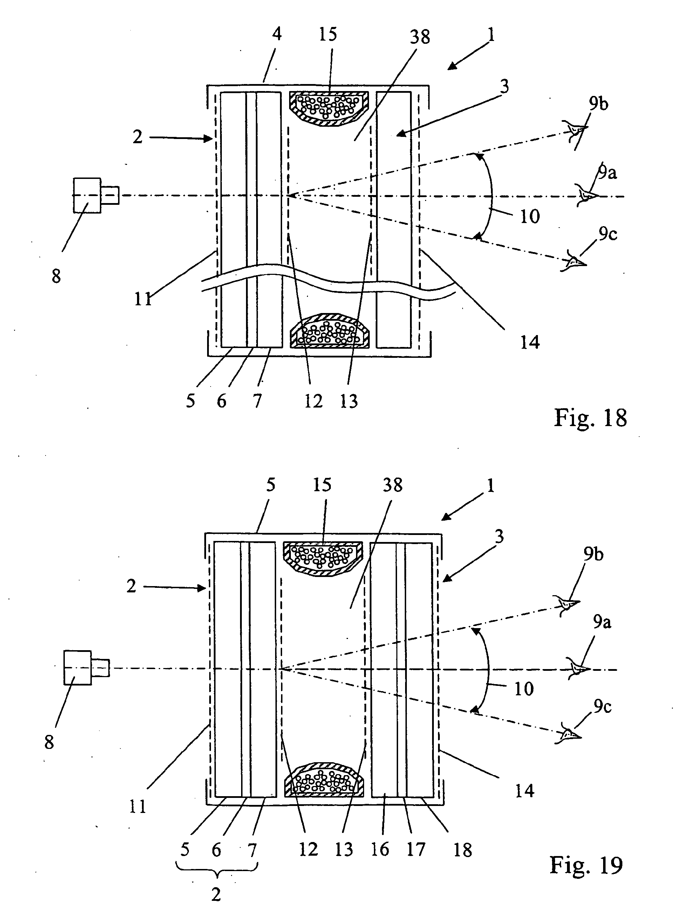

In **Figur 18** wird eine Anordnung in geschnittener Ansicht dargestellt, wobei als zweites Glaselement (3) ein einfaches Floatglaselement oder ein ESG Element verwendet wird. In dieser Ansicht wird eine schematische Systemdarstellung eines Isolierglasaufbaus (1) unter Verwendung von zwei Glaselementen (2, 3) mit einem Abstandsprofil (15) und einem Rahmen (4) mit einem Projektor (8) und einem Beobachter (9a,b,c) skizziert.

Der Projektor (8) kann ein normaler Dia-Projektor oder ein digital ansteuerbaren Beamer auf Basis von beispielsweise DMD-Elementen oder LCD-Penta-Prisma Systemen sein und muss für entsprechende Großbildprojektionen eine entsprechend große Lichtleistung bieten und wird üblicherweise einen entsprechend großen Abstand von dem Projektionsglaselement (1) haben. Allerdings wird im Randbereich der Projektorfläche (1) der Projektorstrahl nicht senkrecht auftreffen, sondern unter einem entsprechenden Winkel.

Das VSG-Element (2) muss Durchlichtprojektionseigenschaften aufweisen und wird aus zumindest zwei Glasscheiben (5, 7) mit dazwischen angeordnetem polymeren Haftverbund (6) aus zumindest einer PVB-Folie oder zumindest einer Haftmatrix-Anordnung im Beschichtungsverfahren gebildet. Die Glasscheiben (6, 7) können aus einfachem Floatglas als auch aus Einscheibensicherheitsglas (ESG) ausgeführt werden. Bevorzugt wird dafür so genanntes Weißglas, also Glas mit einer hohen Transparenz für sichtbares Licht im Bereich von üblicherweise größer 90% verwendet. Allerdings wird zumindest ein Element diese VSG-Elementes (2) in einer eingefärbten oder einfärbenden Ausführung verwendet.

Das VSG-Element (2) ist auf der projektorseitigen Oberfläche mit einer antireflektierenden Beschichtung nach dem Stand der Technik versehen. Diese Oberfläche kann auch seidenmatt satiniert ausgebildet werden, was jedoch etwas Helligkeit kostet.

Die beobachtungsseitige Oberfläche (12) des VSG-Elementes (2) kann als Diffusorelement ausgebildet werden und unterliegt deshalb keiner Verschmutzung, da im Innenbereich (Luftzwischenraum 38) einer Isolierverglasung üblicherweise Edelgas ist und kein Wasserdampf einen Niederschlag bewirken kann.

Alternativ zur Anordnung der Diffusorstruktur auf der Oberfläche (12) kann die Diffusorstruktur in den PVB-Verbund (6) integriert werden.

Das VSG-Element (2) wird in der Isolierglasausführung mittels Abstandshaltern (15) mit im Hohlraum befindlichen Trocknungsmittel, beispielsweise Zeolith-Granulat zur Adsorption von Wasserdampf und nicht gezeichneten thermoplastischen Dichtstoffmassen, beispielsweise Polyisobutylen oder Polysulfid-Polymeren mit einem zweiten Glaselement (3) und einem Rahmen (4) zu einer Einheit verbunden.

Das zweite Glaselement (3) wird zumindest eine Reflexionen reduzierende oder vermeidende Beschichtung (14) nach dem Stand der Technik aufweisen und kann eine weitere funktionale Beschichtung (13) aufweisen.

Selbstverständlich können auch dreiglasige Isolierglasaufbauten verwendet werden, und es kann bei Verwendung eines entsprechend dicken PVB-Verbundes (6) von zum Beispiel 3 oder mehr typisch 380 µm dicken PVB-Einzelfolien und einem dreiglasigen VSG-Aufbau auch dieser VSG-Aufbau als Isolierglasaufbau in eine Fassade integriert werden.

Die Beobachtung (9a, b, c) wird entsprechend der Größe des Projektionsglaselementes (1) aus einer normalerweise größeren Entfernung erfolgen, wobei im Gegensatz zur Forderung bei TFT-Bildschirmen nicht zwangsweise 140° bis 176° Blickwinkel (10) gefordert werden, allerdings doch zumindest 40° und nach Möglichkeit bis 60° und wenn gewünscht darüber, wobei üblicherweise die Helligkeit bei größerem Betrachtungswinkel abnimmt.

In **Figur 19** wird eine Anordnung in geschnittener Ansicht dargestellt, wobei als zweites Glaselement (3) ein weiteres VSG Element verwendet wird. Diese Darstellung soll nur aufzeigen, dass anstelle eines einfachen Floatglases oder Einscheiben-Sicherheits-Glases auch eine VSG-Konstruktion bestehend aus einem inneren Glas (16), einem polymeren Haftverbund (17) und einem äußeren Glaselement (18) verwendet werden kann. Weitere Varianten auf Basis der Verwendung von drei oder mehr Glaselementen wurden nicht zeichnerisch angeführt, sind jedoch je nach Anforderung an die Multifunktionalität eines Projektions-IsolierglasElementes (1) sinnvoll und möglich.

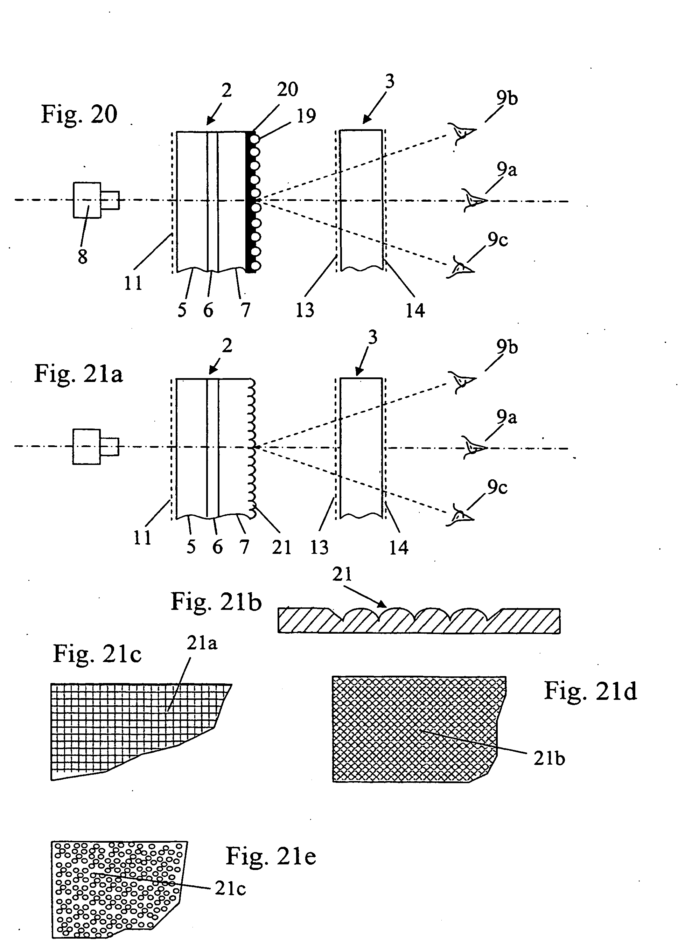

In **Figur 20** wird eine schematische Darstellung einer erfindungsgemäßen Anordnung in geschnittener Ansicht aufgezeigt, wobei die diffuse Struktur (12) durch Glasperlen (19) und eine Haftmatrix (2) gebildet wird. In dieser Ausbildung der Erfindung wird das VSG-Element (2) innenseitig mit einer Haftmatrixschicht (20) mit zumindest teilweise eingebetteten Glaskügelchen (19) versehen.

Die Haftmatrix (19) für eine derartige Glasperlenoberfläche (19) kann aus einem Polymer mit geeigneten Hafteigenschaften und weiteren physikalischen Eigenschaften, wie der Alterungsbeständigkeit und dergleichen gewählt werden und muss entweder gut transparent ausgeführt sein oder entsprechend gefärbt ausgeführt sein oder kann auch photochrom ausgerüstet sein. Weiters muss eine herstelltechnisch akzeptable Trocknung und insbesondere Trocknungstemperatur und Zeit erreicht werden.

Übliche Trocknungstemperaturen für eine derartige polymere Haftmatrix (20) liegen unterhalb 200°C und können daher an einem fertigen VSG-Element (2) kostengünstig herstellt werden.

Die Dicke der polymeren Haftmatrix-Schicht (20) beziehungsweise die Nassauftragsschichtstärke muss auf den mittleren Durchmesser d50 der Glasperlen (19) abgestimmt werden und kann einige 5 bis 50 µm betragen und kann mittels Siebdruck oder Vorhanggießen oder mittels Rollenbeschichtung oder mittels Rakelbeschichtung oder mittels Sprühbeschichtung und dergleichen Beschichtungsverfahren erfolgen. Bei der Verwendung einer eingefärbten Haftmatrix (20) wird darauf geachtet, dass beim Auftragen beziehungsweise Aufstreuen der Glasperlen (19) diese durch Ihr Eigengewicht und die gewählte Viskosität der Haftmatrix (20) auf die Glasoberfläche absinken und derart mit der Glasoberfläche (12) in Berührung kommen.

Damit wird ein Projektionsstrahl ungehindert von der eingefärbten Haftmatrix (20) diese diffuse Beschichtung durchdringen und im Glaskügelchen (19) gestreut werden. Es kommt dabei zu einem Effekt wie bei einer Lochmaske einer Elektronenstrahlröhre. Das Licht geht nur durch die punktförmigen, als diesen wirkenden Glaskügelchen hindurch, wird aber im Umgehungsbereich auf die lichtundurchlässige Haftmatrix treffen.

Neben der Verwendung einer polymeren Haftmatrix (20) kann eine Glasfritten-oder Lotglas-Beschichtung (20) verwendet werden. Dabei muss darauf geachtet werden, dass derartige anorganische transparente oder bevorzugt eingefärbte und ganz besonders neutral grau ausgebildete Schichten (20) eine für den VSG-Herstellprozess und für die Beständigkeit der Glaskügelchen (19) niedere Verfahrenstemperatur aufweisen und zumindest unterhalb 620°C angewendet werden und bevorzugt unterhalb 500°C verwendet werden und ganz besonders unterhalb 400°C verwendet werden.

In **Figur 21a** wird eine schematische Darstellung einer nicht erfindungsgemäßen Anordnung in geschnittener Ansicht aufgezeigt, wobei die diffuse Struktur (12) durch eine linsenartige Struktur (21) gebildet wird, wobei idealerweise eine hexagonal (ähnlich 21 c) oder rechteckförmige (21 a) oder dreieckförmige (21 b) oder kreisförmige (21 c) oder zufällig angeordnete linsenstrukturartige Oberfläche erzeugt wird. Da diese Oberfläche im Innenraum eines Isolierglasverbundes angeordnet ist, muss auf eine leichte Reinigbarkeit keine Rücksicht genommen werden, sondern kann die Optimierung der Projektionseigenschaften vorrangig beachtet werden.

Die Herstellung derartiger linsenartiger Strukturen (21) kann mittels Schleiftechnik oder Strahltechnik und/oder Ätztechnik und derartigen Fertigungsmethoden erfolgen und ermöglichen derart einen Betrachtungswinkel H/V (10) von zumindest 40°, insbesondere größer 50° und ganz besonders größer 60°.

Diese linsenartige Oberfläche (21) wird also bevorzugt auf der beobachtungsseitigen Oberfläche (12) des VSG-Glaselementes (2) ausgeführt und deren Herstellung kann ebenso durch eine Art Sandstrahlen mit entsprechenden oberflächenbearbeitenden Teilchen in Form von Glaskügelchen oder korundartigen Teilchen oder Walnusskernen oder Kirschkernen und dergleichen erfolgen. Dabei kann durch die spezielle Strahltechnik und Wahl der Strahlmaterialien und deren Durchmesser und des Strahldruckes und der Dauer der Bestrahlung eine diffuse Oberfläche (12) erzeugt werden, die eine nahezu isotrope Strahlcharakteristik aufweist.

Meist ist im Anschluss an die strahltechnische Oberflächenbehandlung noch ein chemischer Oberflächenprozess erforderlich und kann dabei die Transparenz erhöht werden. Eine projizierte Abbildung kann daher von einem Betrachter horizontal und vertikal unter einem großen Beobachtungswinkel wahrgenommen werden.
In **Figur 21b** wird eine schematische Darstellung des Schnittes einer nicht erfindungsgemäßen linsenartige Struktur (21) aufgezeigt. In dieser Darstellung wird ein idealisiertes Linsenraster schematisch skizziert, wobei typische Linsenradien im Bereich von 20 bis 300 µm verwendet werden und die Eindringtiefe wenige 10 bis 200 µm beträgt. Diese ideale linsenartige Ausbildung wird aus Kostengründen und aus Fertigungsgründen kaum erreicht und ist auch nicht unbedingt notwendig, um eine ausgezeichnete Projektionsqualität zu erzielen. Es reicht oftmals, eine isotrope Streucharakteristik zu erreichen.

In **Figur 21c** wird eine schematische Darstellung der linsenartige rechteckartigen Struktur (21a) in Draufsicht aufgezeigt. Eine derartige Struktur (21 a) wird beispielsweise durch die Bearbeitung der VSG-Element-Oberfläche (12) mit einer profilierten Schleifscheibe oder einem Schleifroboter, wobei diese Profile in x- und in y-Richtung ausgeführt werden. Oftmals ist ein anschließender chemischer Verrundungs- oder Polierprozess von Vorteil. Neben der schleiftechnischen Herstellung sind natürlich alle anderen Fertigungsverfahren, wie Ätzen oder Laserstrukturierung ebenfalls möglich.

In **Figur 21d** wird eine schematische Darstellung der linsenartige dreieckartigen Struktur (21b) in Draufsicht aufgezeigt. Dabei erfolgt die Bearbeitung in drei Schritten und jeweils 120° Drehung und werden derart dreieckartige linsenartige Gebilde erzeugt. Grundsätzlich wären natürlich auch noch sechseckige und achteckige Strukturen möglich, allerdings nehmen die Fertigungskosten analog zu. Die ätztechnische Herstellung ist in diesem Fall ebenso möglich.

In **Figur 21e** wird eine schematische Darstellung der linsenartigen kreisförmigen Struktur (21c) in Draufsicht aufgezeigt. Auch diese Abbildung soll nur schematisch linsenartige Strukturen aufzeigen. Bevorzugt wird eine derartige Struktur durch Ätztechnik oder Strahltechnik und dergleichen Verfahren hergestellt. Die Anordnung als gleichseitiges Dreiecke ist bei einer geometrisch festlegbaren Geometrie sehr günstig. Eine zufällige Anordnung ist ebenso möglich und vermeidet Interferenzerscheinungen bei der Darstellung.

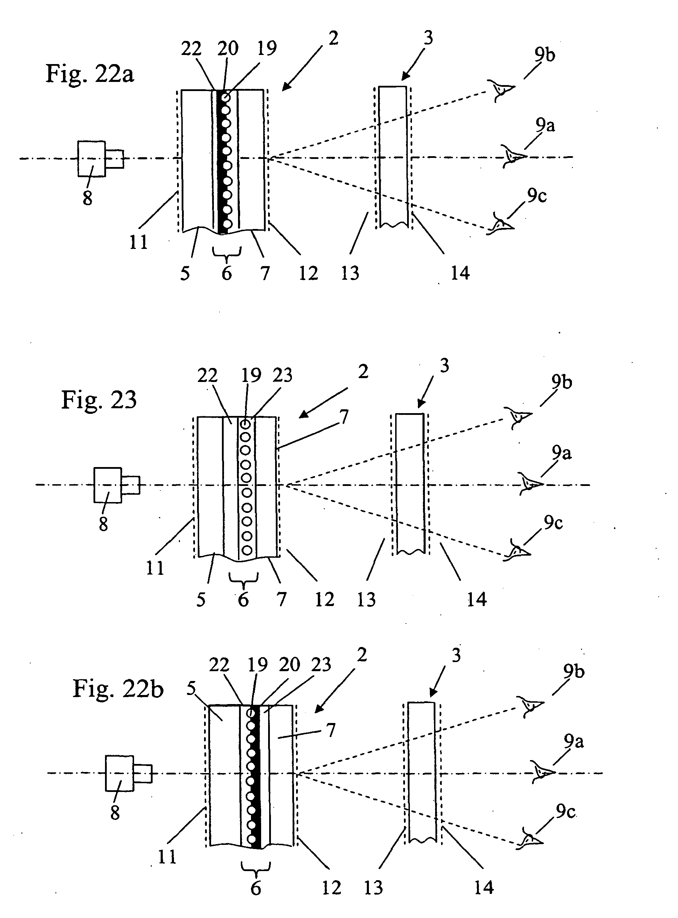

In **Figur 22a** wird eine schematische Darstellung einer erfindungsgemäßen Anordnung in geschnittener Ansicht aufgezeigt, wobei die diffuse Struktur (19, 20, 22, 23) im VSG-Element (2) integriert ist und auf der projektorseitigen PVB-Folie (22) angeordnet ist.
Dabei werden Glaskügelchen oder Hohlglaskügelchen(19) als Streuzentren und damit als Diffusorquellen im PVB-Verbund direkt sehr kostengünstig und mit gutem Effekt eingebaut.

In einer Ausführungsform der Integration von Glaskügelchen (19) in den PVB-Verbund (6) wird eine beispielsweise 380 µm dicke PVB-Folie (22) mit einer etwa 5 bis 50 µm dicken polymeren transparenten oder eingefärbten Schicht (20) versehen. Dies kann mittels Siebdruck oder Vorhanggießen oder mittels Rollenbeschichtung oder mittels Rakelbeschichtung oder mittels Sprühbeschichtung und dergleichen Beschichtungsverfahren erfolgen. Anschließend werden die Glaskügelchen (19) auf die noch nicht getrocknete Beschichtung (20) gebracht und je nach Verfahren sinken diese bis auf die PVB-Oberfläche (22) hindurch oder können leicht angedrückt werden. Je nach gewünschter Dichte können die Glaskügelchen (19) im Überschuss oder exakt dosiert für eine gewünschte Dichte beziehungsweise Bedeckung aufgebracht werden und muss gegebenenfalls der Überschuss an Glasperlen (19) nach der Trocknung beziehungsweise Antrocknung entfernt werden.

Die Anordnung der polymeren Haftmatrix (20) mit den Glaskügelchen (19) kann auf einer PVB-Folie projektorseitig (22) oder beobachterseitig (23) - vergleiche Fig. 5b ausgeführt werden. Für eine Tageslichtprojektion wird die Anordnung beobachterseitig eingefärbt bevorzugt.

Die Einfärbung dieser Haftmatrix (20) kann photochrom oder thermochrom erfolgen. Es kann jedoch auch eine PVB-Folie (22, 23) eingefärbt ausgebildet werden. Weiters ist die Erfindung nicht auf die Verwendung von zwei PVB-Folien (22, 23) mit typisch 380 µm Dicke beschränkt, sondern können drei oder mehr PVB-Folien verwendet werden und es kann die polymere eingefärbte oder sich einfärbende Haftmatrix (20) bei entsprechend planen Glasscheiben ohne PVB-Folien verwendet werden, wobei in diesem Fall auf der anderen Glasscheibe eine weitere und in diesem Fall transparente Haftmatrix angeordnet werden muss.

Die Erfindung ist auch nicht auf die Verwendung von PVB-Folien oder eine PVB-basierende Haftmatrix beschränkt, sondern können andere VSG-Verbundpolymere wie PVA oder PC oder PVC und dergleichen verwendet werden und es kann anstelle der Folien-Autoklav-Lamination auch ein Gießverfahren eingesetzt werden.

In **Figur 22b** wird eine schematische Darstellung einer erfindungsgemäßen Anordnung in geschnittener Ansicht aufgezeigt, wobei die diffuse Struktur (19, 20, 22, 23) im VSG-Element (2) integriert ist und auf der beobachtungsseitigen PVB-Folie (23) angeordnet ist. Es gelten auch hier die unter Fig. 5a genannten Angaben.

In **Figur 23** wird eine schematische Darstellung einer erfindungsgemäßen Anordnung in geschnittener Ansicht aufgezeigt, wobei die diffuse Struktur (19, 20, 22, 23) im VSG-Element (2) integriert ist und extrusionstechnisch matrixartig in der PVB-Folie (23) enthalten ist.

Es wurde gefunden, dass bei optimaler Wahl des Brechungsindex der Glaskügelchen beziehungsweise Glashohlkügelchen (19) abgestimmt auf den Brechungsindex der PVB-Folie (23), eine Extrusion beziehungsweise auch Koextrusion einer PVB-Folie mit im Volumen gleichmäßig verteilten Glaskügelchen (19) eine sehr kostengünstige und wirksame Herstellmethode ist, allerdings muss hierbei eine entsprechende Fertigungslosgröße beziehungsweise Menge gegeben sein, da ein Extrusionsvorgang nicht für kleine Mengen kostengünstig ausgeführt werden kann. Eine Koextrusion kann beispielsweise eine eingefärbte und eine nichteingefärbte PVB-Schicht mit integrierten Glaskügelchen aufweisen.

Eine derartige Ausführung ist weiters durch die Verwendung von nur einer PVB-Folie (23), aber ebenso durch die Verwendung von zwei oder mehr PVB-Folien ausführbar.

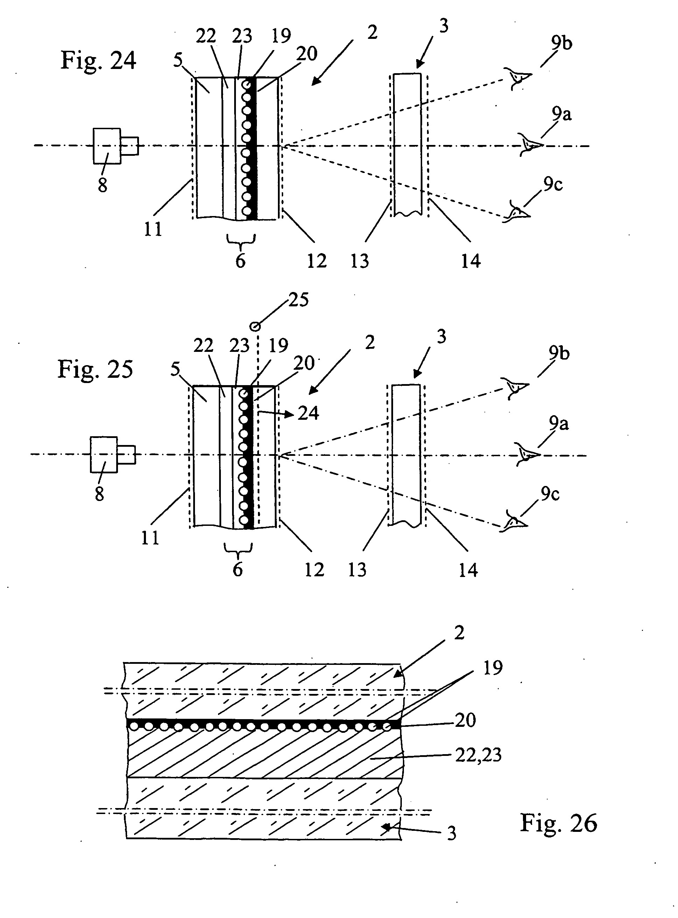

In **Figur 24** wird eine schematische Darstellung einer erfindungsgemäßen Anordnung in geschnittener Ansicht aufgezeigt, wobei die diffuse Struktur (19, 20, 22, 23) im VSG-Element (2) integriert ist und auf der dem Projektor (8) zugewandten Oberfläche des Glaselementes (7) angeordnet ist. In dieser sehr kostengünstig und effizient herstellbaren Variante wird auf dem Glaselement (7) eine polymere oder anorganische Haftmatrix (20) aufgebracht und werden Glaskügelchen beziehungsweise Hohlglaskügelchen (19) derart eingebettet, dass diese bis auf die Oberfläche des Glaselementes (7) absinken beziehungsweise eingedrückt werden.

Die Haftmatrix wird bevorzugt eingefärbt ausgeführt, kann jedoch ebenso photochrom eingestellt werden, sodass bei Sonnenlicht und derart bei UV-Bestrahlung eine Verdunkelung der Haftmatrix (20) eintritt und so bei heller Umgebung die Projektionseigenschaften wesentlich besser sind. In dieser Figur werden zwei PVB-Folien (22, 23) für die Herstellung des VSG-Elementes (2) eingezeichnet.

Es können auch mehrere PVB-Folien verwendet werden und es kann anstelle der PVB-Folien eine zweite und in diesem Fall transparente Haftmatrix (20) auf das Glas (6) beschichtet werden. In diesem Fall müssen jedoch die Glassubstrate (5, 7) eine sehr ebene Oberfläche aufweisen, da derartige Haftmatrix-Schichten (20) üblicherweise nur wenige 2 bis 50 µm Dicke aufweisen und damit keine lufteinschlussfreie Lamination gewährt ist.

In **Figur 25** wird eine schematische Darstellung einer erfindungsgemäßen Anordnung in geschnittener Ansicht aufgezeigt, wobei die diffuse Struktur (19, 20, 22, 23) im VSG-Element (2) integriert ist und auf der dem Projektor (8) zugewandten Oberfläche des Glaselementes (7) angeordnet ist und die Haftmatrix (20) thermochrom ausgebildet ist und eine elektrisch beheizbare transparente dünne Schicht (24) mit zwei an entgegengesetzten Kanten befindlichen Anschlüssen (25, 26) mit elektrischer Energie versorgt werden kann.

Die unmittelbar benachbart transparente elektrisch leitfähige Heizschicht (24) kann durch die Beaufschlagung von Niederspannung an zwei entgegengesetzten Seitenkantenanschlüssen (25, 26) auf zumindest größer 30°C und insbesondere über 35°C erwärmt werden. Dadurch wird die thermochrome Matrix (20) von einem im sichtbaren Wellenlängenbereich bei üblichen Innenraumtemperaturen unterhalb 30°C beziehungsweise 35°C transparenten Zustand in einen opaken dunkelgrauen oder dunkelfarbigen Zustand übergeleitet. Auf diese Weise ist das Projektionsglaselement ohne Beheizung der Schicht (24) gut durchsichtig ist und nur bei Tageslicht und im Falle einer Projektion durch Einschaltung der Spannung an (25, 26) dunkel gestellt.

Die transparente elektrisch leitfähige und beheizbare Schicht (24) kann dabei mittels pyrolytischer eindiffundierter Heizschicht hergestellt werden. In diesem Fall sind zwei gegenüberliegende Seitenkanten mit dünnen gut elektrisch leitfähigen Streifen zu versehen, die wiederum mit den elektrischen Anschlüssen (25, 26) durch Löten versehen werden können. Es können jedoch genauso gut ITO-Schichten oder dünne weitgehend transparente anorganische oder intrinsisch leitfähige organische Schichten aufgetragen werden. Die Kontaktierung kann beispielsweise durch ein Kupfer- oder Aluminiumklebeband mit elektrisch leitfähiger Klebebeschichtung erfolgen, wobei eine gleichmäßige Anpressung zur Reduktion des Übergangswiderstandes gegeben sein muss, Die Heizspannung soll eine Niederspannung sein und die Temperatur kann durch Temperatursensoren oder durch optische Sensoren eingestellt werden.

In **Figur 26** sind die beiden Glaselemente 2 und 3 lediglich schematisiert dargestellt. Sie können aus einem einfachen Floatglas, jedoch auch wahlweise aus einem ESG oder einem VSG bestehen. Diese Verallgemeinerung gilt im übrigen auch für sämtliche, in der vorliegenden Erfindungsbeschreibung erwähnten Ausführungsbeispiele.

Diese Ausführungsform besteht aus einem Schichtenaufbau mit einem ersten Glaselement 2 auf dessen Oberfläche sind Glaskügelchen 19 in einer transparenten oder nicht transparenten Schicht 20 gebunden.

Diese nicht transparente Schicht 20 kann thermochrom oder fotochrom gesteuert von transparent auf nicht-transparent verändert werden.
An die Schicht 20 schließt sich eine durchsichtige Schicht 22, 23 an, wobei diese Schicht als Folie oder als gegossene Schicht ausgebildet sein kann, mit dem Vorteil, dass damit die Glaskugeln 19 noch besser in dem Verbund der Schicht 20 gehalten werden.
Die Schicht 22 oder 23 ist wiederum durch eine weitere Glasscheibe (allgemein ein Glaselement 3) abgedeckt, die entweder als Floatglas, als ESG oder als VSG ausgebildet sein kann.

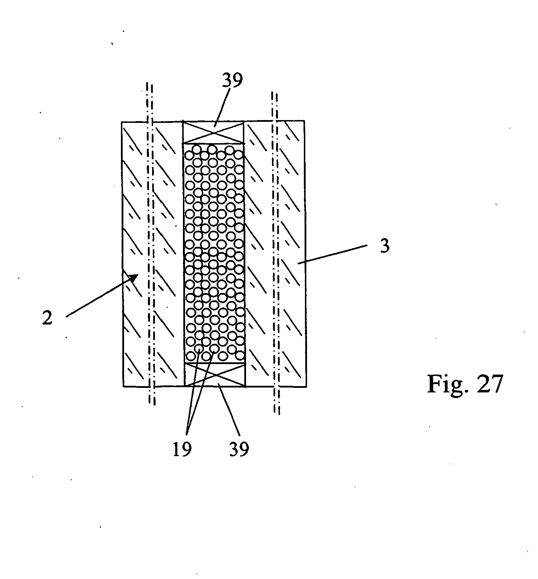

In **Figur 27** ist ein Schichtenverbund mit zwei Glaselementen 2, 3 dargestellt, in deren Zwischenraum die Glaskügelchen 19 angeordnet sind. Die lose Schüttung der Glaskugeln 19 hat den Vorteil gegenüber dem Stand der Technik (WO 03/21349A1), dass eine fixierende Schicht zur Halterung der Glaskugeln entfallen kann. Der Luftzwischenraum zwischen den beiden Glaselementen 2, 3 ist durch Abstands-haltende Abdichtungen 39 gebildet. Er kann wahlweise evakuiert oder nicht evakuiert sein.

Die Größe (Durchmesser) der Glaskügelchen 19 in allen Ausführungsbeispielen kann in weiten Grenzen verändert werden, sie können einen Durchmesser von 5 µm bis mehr als 3 Millimeter aufweisen.

Bevorzugt wird ein Brechungsindexunterschied zwischen den Glaskugeln 19 und der nicht transparenten oder transparenten Schicht 20, in den diese eingebettet sind von zumindest 0,05. Insbesondere werden Glaskügelchen beziehungsweise Glashohlkügelchen mit einem Brechungsindex von 1,6 bis 1,7 bis zu 2,1 verwendet, wobei Glashohlkügelchen bei optisch guter innerer Oberfläche grundsätzlich auch ohne Brechungsindex-Unterschied zur Umgebung verwendbar sind.

Damit wird der Vorteil erreicht, dass sich die Lichtstrahlen, die auf die Oberfläche der Glaskugeln 19 treffen, ungehindert im Material des Glases fortpflanzen können und in der umgebenden t nicht transparenten Schicht 20 ein Durchtritt der Lichtstrahlen weitgehend nicht gegeben ist. Es wird also die Oberfläche der Glaskügelchen beziehungsweise der Glashohlkügelchen für die Lichtstreuung verwendet und für Tageslichtprojektionen wird eine eingefärbte oder eine einfärbende Schicht 20 bevorzugt. Bei Glashohlkügelchen kann alternativ oder zusätzlich die Lichtstreuung auf der inneren Hohlkugeloberfläche erfolgen.

Der Diffusor-Effekt entsteht hierbei an den Oberflächen der Glaskugeln 19.

### Bezugszeichenliste

- 1: Transluzentes Projektionsglaselement (Durchlichtprojektion bzw. Rückwandprojektion als auch Auflichtprojektion; also die Projektion auf einer Seite und die Beobachtung auf der anderen Seite oder Projektion und Beobachtung auf einer Seite, wobei auch im Falle der Auflichtprojektion das Projektionsglaselement transluzent durchscheinend ausgeführt ist.
- 2: Erstes Glaselement: Floatglas oder ESG oder VSG
- 3: Zweites Glaselement: Floatglas oder ESG oder VSG
- 4: Lagerungselement des Isolierglasaufbaues
- 5: Glaselement projektionsseitig
- 6: PVB- oder EVA- oder PVA- Element des VSG
- 7: Glaselement beobachterseitig
- 8: Projektor: Beamer, LCD- oder DMD- oder allg. Projektor
- 9: Beobachter a , b, c
- 10: Betrachtungswinkel H/V Horizontal/Vertikal (bei TFT-Bildschirmen werden derzeit Werte zwischen 120° bis etwa 176° erreicht)
- 11: Projektorseitige Oberfläche des Glaselementes 2 (antireflektierbar)
- 12: Beobachterseitige Oberfläche des Glaselementes 2
- 13: Projektorseitige Oberfläche des zweiten Glaselementes 3 (Funktionsbeschichtung)
- 14: Beobachterseitige Oberfläche des zweiten Glaselementes 3 (Antireflex)
- 15: Abstandsprofil für den Isolierglasverbund: üblicherweise werden Aluminium- oder Stahl- oder Kunststoffprofile mit Trocknungsmittel in Form von beispielsweise Zeolith-Granulat verwendet, das u.U. eindringenden Wasserdampf adsorbieren soll.
- 16: VSG-Glaselement projektionsseitig des zweiten Glaselementes 3
- 17: Polymeres Haftverbund-Element des zweiten Glaselementes 3
- 18: VSG-Glaselement beobachterseitig des zweiten Glaselementes 3
- 19: Glaskügelchen: d50 im Bereich 10 bis 200 µm, insbesondere 20 bis 100 µm und einem Brechungsindex von 1,6 bis 2,5, insbesondere 1,6 bis 1,9
- 20: Bindemittel / Haftmittel - Matrix: eingefärbt bzw. photochrom bzw. thermochrom
- 21: Linsenartige Oberflächenstruktur: rechteckförmig, dreieckförmig, kreisförmig; geschliffen, geätzt, gelasert, 21 a, 21 b, 21 c
- 22: Haftverbundfolie-Folie projektorseitig
- 23: Haftverbund-Folie beobachtungsseitig
- 24: Elektrisch leitfähige transparente Heizschicht mit seitlichen Anschlüssen
- 25: Seitlicher elektrischer Anschluss oben
- 26: Seitlicher elektrischer Anschluss unten bzw. an der gegenüberliegenden Kante
- 27: Gebäude
- 28: Fensterelement
- 29: Spiegel
- 30: Gebäuderaum
- 31: Fassadenelement
- 32: Lagerpunkt
- 33: Lagerkante
- 34: Wandöffnung oder Laibung
- 35: Rahmenprofil
- 36: Klebefläche
- 37: Halter
- 38: Scheibenzwischenraum

## Patentansprüche

1. Projektionsglaselement (1) als Teil einer Fassade eines Bauwerkes oder als Raumteiler, das mindestens eine Projektionsfläche für eine Durchlichtals auch Auflicht-Projektion ausbildet, wobei das Projektionsglaselement (1) als Isolierscheiben-Aufbau mit mindestens einem projektornahen Glaselement (2) und einem davon im Abstand angeordneten, weiteren Glaselement (3) besteht, wobei zwischen den beiden Glaselementen (2, 3) ein Scheibenzwischenraum (38) angeordnet ist, der bevorzugt mit Edelgas befüllt ist und ein Glaselement (2 oder 3) eine diffus ausgebildete Oberfläche (12, 19, 20, 21) oder eine Schichtlage (19, 20, 23) aufweist, **dadurch gekennzeichnet, dass** die diffus wirkende Oberfläche (12) des Glaselementes (2) mittels Glaskügelchen oder Glashohlkügelchen (19) hergestellt wird, welche in einer Haftmatrix (20) angeordnet sind, welche Haftmatrix mittels Siebdruck, Vorhanggießen, Rollenbeschichtung, Sprühbeschichtung, Rakelbeschichtung oder ähnlichem Beschichtungsverfahren auf das Glaselement (2 oder 3) aufgebracht ist und eine innere Schicht als Diffusorschicht ausbildet oder als Schichtlage (19, 20, 23) in einem Zwischenraum zwischen den Glaselementen (2, 3) angeordnet ist.

2. Projektionsglaselement (1) nach Anspruch 1, wobei die Haftmatrix (20) ein eingefärbtes Lotglas ist und die Glaskügelchen (19) einen Durchmesser von 5 µm bis 2 mm, insbesondere 50 µm bis 100 µm, aufweisen und einen Brechungsindex von etwa 1,6 bis 2,5, insbesondere 1,6 bis 1,9 aufweisen und etwa bis zur Hälfte im Lotglas eingebettet sind.

3. Projektionsglaselement nach Anspruch 2, **dadurch gekennzeichnet, dass** die Haftmatrix (20) als eine eingefärbte polymere oder thermochrome Matrix (20) ausgebildet ist, wobei die polymere Matrix (20) einen Brechungsindex von etwa 1,5 aufweist und die Glaskügelchen (19) einen Durchmesser von 5 µm bis 2 mm, insbesondere 50 µm bis 100 µm, aufweisen und einen Brechungsindex von etwa 1,6 bis 2,1, insbesondere 1,6 bis 1,9 aufweisen und wobei an die thermochrome Matrix (20) unmittelbar benachbart eine transparente elektrisch leitfähige Heizschicht (24) angeordnet ist, die durch Beaufschlagung von Niederspannung an zwei entgegen gesetzten Seitenkantenanschlüssen (25, 26) auf zumindest größer 30°C und insbesondere über 35°C erwärmbar ist und die thermochrome Matrix (20) von einem im sichtbaren Wellenlängenbereich bei üblichen Innenraumtemperaturen unterhalb 30°C beziehungsweise 35°C transparenten Zustand in einen opaken dunkelgrauen oder dunkelfarbigen Zustand überleitet, wobei das Projektionsglaselement ohne Beheizung der Schicht (24) gut durchsichtig ist und nur bei Tageslicht und im Falle einer Projektion durch Einschaltung der Spannung an den Seitenkantenanschlüssen (25, 26) dunkel gestellt ist.

4. Projektionsglaselement (1) nach einem der Ansprüche 2 bis 3, **dadurch gekennzeichnet, dass** die diffus wirkende Oberfläche (19, 20, 22, 23) des Glaselementes (2) durch den Einbau von Glaskügelchen (19) in den PVB-Verbund (20, 23) hergestellt ist und dass die Glaskügelchen einen Durchmesser von 5 µm bis 2 mm, insbesondere 50 µm bis 100 µm, aufweisen und einen Brechungsindex von etwa 1,6 bis 2,1, insbesondere 1,6 bis 1,9 aufweisen, wobei der Einbau der Glaskügelchen (19) durch die Beschichtung der Haftverbundfolie (22) mit einer polymeren Haftbeziehungsweise Bindemittelschicht (20) erfolgt und in diese Schicht (20) die Glaskügelchen (19) eingebettet werden und diese beschichtete Haftverbundfolie (22, 19, 20) in einem Autoklaven mit zumindest zwei Glaselementen (5, 7) zu einem VSG-Glasverbund (2) gefertigt wird.

5. Projektionsglaselement (1) nach einem der Ansprüche 2 bis 4, **dadurch gekennzeichnet, dass** der Einbau der Glaskügelchen (19) durch die Beschichtung der Haftverbundfolie (23) mit einer polymeren Haft-beziehungsweise Bindemittelschicht (20) erfolgt und in diese Schicht (20) die Glaskügelchen (19) eingebettet werden und diese beschichtete Haftverbundfolie (23, 19, 20) in einem Autoklaven mit zumindest zwei Glaselementen (5, 7) zu einem VSG-Glasverbund (2) gefertigt werden.

6. Projektionsglaselement (1) nach einem der Ansprüche 2 bis 5, **dadurch gekennzeichnet, dass** der Einbau der Glaskügelchen (19) durch die Beschichtung der Glasscheibe (7) mit einer polymeren Haft-beziehungsweise Bindemittelschicht (20) erfolgt und in diese Schicht (20) die Glaskügelchen (19) eingebettet werden und anschließend mit zumindest einer Haftverbundfolie (22, 23) in einem Autoklaven mit zumindest einem zweiten Glaselement (5) zu einem VSG-Glasverbund (2) gefertigt wird.

7. Projektionsglaselement (1) nach einem der Ansprüche 2 bis 6, **dadurch gekennzeichnet, dass** die Bindemittelschicht (20) eingefärbt, photochrom oder thermochrom ausgeführt ist, wobei an die thermochrom ausgeführte Bindemittelschicht (20) unmittelbar benachbart eine transparente elektrisch leitfähige Heizschicht (24) angeordnet ist, die durch Beaufschlagung von Niederspannung an zwei entgegen gesetzten Seitenkantenanschlüssen (25, 26) auf zumindest größer 30°C und insbesondere über 35°C erwärmbar ist und die thermochrome Matrix (20) von einem im sichtbaren Wellenlängenbereich bei üblichen Innenraumtemperaturen unterhalb 30°C beziehungsweise 35°C transparenten Zustand in einen opaken dunkelgrauen oder dunkelfarbigen Zustand überleitet und derart das Projektionsglaselement ohne Beheizung der Schicht (24) gut durchsichtig ist und nur bei Tageslicht und im Falle einer Projektion durch Einschaltung der Spannung an (25, 26) dunkel gestellt wird.

8. Projektionsglaselement (1) nach einem der Ansprüche 2 bis 7, **dadurch gekennzeichnet, dass** die Haftverbundfolie (22) oder die Haftverbundfolie (23) eingefärbt beziehungsweise photochrom ausgeführt ist und der Einbau der Glaskügelchen (19) in eine Haftverbundfolie (23) mittels Extrusion oder Gießen erfolgt oder als lose Schüttung in einem Zwischenraum zwischen den Glaselementen (2, 3) angeordnet ist.

9. Verfahren zur Herstellung eines Projektionsglaselementes (1) nach einem der Ansprüche 1 bis 8, **gekennzeichnet durch** die Anbringung von Glaskügelchen (19) auf einer eingefärbten beziehungsweise sich einfärbenden Haftmatrix (20) im Verlauf der Beschichtung zur Herstellung eines Glaselementes (2) aus welchen in Verbindung mit einem weiteren Glaselement (3) das Projektionsglaselement (1) hergestellt wird.

## Claims

1. Projection glass element (1) as part of a façade of building or as a room divider, which forms at least one projection face for a rear and a front projection, the projection glass element (1) being an insulating panel structure with at least one glass element close to the projector and a further glass element (3) arranged at a spacing therefrom, an intermediate panel space (38) being arranged between the two glass elements (2, 3), which is preferably filled with inert gas, and one glass element (2 or 3) having a diffuse surface (12, 19, 20, 21) or a layer (19, 20, 23), **characterised in that** the diffusely acting surface (12) of the glass element (2) is produced by means of glass beads or hollow glass beads (19), which are arranged in an adhesive matrix (20), which adhesive matrix is applied by means of screen printing, curtain casting, roller coating, spray coating, doctor blade coating or similar coating methods to the glass element (2 or 3) and forms an inner layer as a diffuser layer or is arranged as a layer (19, 20, 23) in an intermediate space between the glass elements (2, 3).

2. Projection glass element (1) according to claim 1, wherein the adhesive matrix (20) is a tinted solder glass and the glass beads (19) have a diameter of 5 µm to 2 mm, in particular 50 µm to 100 µm and a refraction index of about 1.6 to 2.5, in particular 1.6 to 1.9 and are up to about half embedded in the solder glass.

3. Projection glass element according to claim 2, **characterised in that** the adhesive matrix (20) is configured as a tinted polymeric or thermochromic matrix (20) the polymeric matrix (20) having a refraction index of about 1.5 and the glass beads (19) having a diameter of 5 µm to 2 mm, in particular 50 µm to 100 µm and a refraction index of about 1.6 to 2.1, in particular 1.6 to 1.9 and a transparent electrically conductive heating layer (24) being arranged directly adjacent to the thermochromic matrix (20), said heating layer being heatable to at least more than 30°C and in particular above 35°C by loading of low voltage on to two opposing side edge connections (25, 26) and transferring the thermochromic matrix (20) from a transparent state in the visible wavelength range at conventional interior temperatures below 30°C or 35°C to an opaque dark grey or dark-coloured state, the projection glass element being easily transparent without heating of the layer (24) and only being set to dark in daylight and in the event of a projection by switching on the voltage at the side edge connections (25, 26).

4. Projection glass element (1) according to either of claims 2 or 3, **characterised in that** the diffusely acting surface (19, 20, 22, 23) of the glass element (2) is produced by installing glass beads (19) in the PVB composite (20, 23) and **in that** the glass beads have a diameter of 5 µm to 2 mm, in particular 50 µm to 100 µm and a refraction index of about 1.6 to 2.1, in particular 1.6 to 1.9, the glass beads (19) being installed by the coating of the adhesive composite film (22) with a polymeric adhesive or binder layer (20) and the glass beads (19) being embedded in this layer (20) and this coated adhesive composite film (22, 19, 20) being manufactured in an autoclave with at least two glass elements (5, 7) to form a VSG glass composite (2).

5. Projection glass element (1) according to any one of claims 2 to 4, **characterised in that** the glass beads (19) are installed by coating the adhesive composite film (23) with a polymeric adhesive or binder layer (20) and the glass beads (19) are embedded in this layer (20) and this coated adhesive composite film (23, 19, 20) is manufactured in an autoclave with at least two glass elements (5, 7) to form a VSG glass composite (2).

6. Projection glass element (1) according to any one of claims 2 to 5, **characterised in that** the glass beads (19) are installed by coating the glass panel (7) with a polymeric adhesive or binder layer (20) and the glass beads (19) are embedded in this layer (20) and then manufactured with at least one adhesive composite film (22, 23) in an autoclave with at least a second glass element (5) to form a VSG glass composite (2).

7. Projection glass element (1) according to any one of claims 2 to 6, **characterised in that** the binder layer (20) is tinted, photochromic or thermochromic, wherein a transparent electrically conductive heating layer (24) is arranged directly adjacent to the thermochromic binder layer (20), and can be heated to at least more than 30°C and in particular above 35°C by loading of low voltage on two opposing side edge connections (25, 26) and transfers the thermochromic matrix (20) from a transparent state in the visible wavelength range at conventional interior temperatures below 30°C or 35°C to an opaque dark grey or dark-coloured state and in this manner the projection glass element is easily transparent without heating of the layer (24) and is only set to dark in daylight and in the case of a projection by switching on the voltage (25, 26).

8. Projection glass element (1) according to any one of claims 2 to 7, **characterised in that** the adhesive composite film (22) or the adhesive composite film (23) is tinted or photochromic and the glass beads (19) are installed in an adhesive composite film (23) by means of extrusion or casting or are arranged as a loose fill in an intermediate space between the glass elements (2, 3).

9. Method for producing a projection glass element (1) according to any one of claims 1 to 8, **characterised by** providing glass beads (19) on an adhesive matrix (20) which is tinted or becomes tinted in the course of the coating to produce a glass element (2), from which, in conjunction with a further glass element (3), the projection glass element (1) is produced.

## Revendications

1. Elément de projection en verre (1) comme élément d'une façade d'un bâtiment ou comme panneau de séparation, qui réalise au moins une surface de projection pour une projection par transparence ainsi que projection frontale directe, l'élément en verre de projection (1) se composant d'une structure de vitres isolantes avec au moins un élément en verre (2) proche du projecteur et un autre élément en verre (3) disposé à distance de celui-ci, entre les deux éléments de verre (2, 3) étant disposé un espace intermédiaire de vitre (38) et est rempli de préférence de gaz rare et un élément en verre (2 ou 3) présentant une surface (12, 19, 20, 21) réalisée de manière diffuse ou une couche stratifiée (19, 20, 23), **caractérisé en ce que** la surface (12) agissant de manière diffuse de l'élément en verre (2) est fabriquée au moyen de microbilles de verre ou de microbilles creuses de verre (19) qui sont disposées dans une matrice adhésive (20) qui est appliquée par sérigraphie, moulage de type rideau, laminage sur bande, revêtement par pulvérisation, revêtement par raclage ou procédé de revêtement similaire sur l'élément en verre (2 ou 3) et forme une couche intérieure comme couche de diffusion ou est disposée comme couche stratifiée (19, 20, 23) dans un espace intermédiaire entre les éléments de verre (2, 3).

2. Elément de projection en verre (1) selon la revendication 1, la matrice adhésive (20) étant un verre vertical teinté et les microbilles de verre (19) présentant un diamètre de 5 µm à 12 mm, en particulier de 50 µm à 100 µm, et présentant un indice de réfraction d'environ 1,6 à 2,5, en particulier de 1,6 à 1,9, et étant noyées environ jusqu'à la moitié dans le verre vertical.

3. Elément de projection en verre selon la revendication 2, **caractérisé en ce que** la matrice adhésive (20) est réalisée comme une matrice (20) thermochromique ou polymère teintée, la matrice (20) polymère présentant un indice de réfraction d'environ 1,5 et les microbilles de verre (19) présentant un diamètre de 5 µm à 2 mm, en particulier de 50 µm à 100 µm, et présentant un indice de réfraction d'environ 1,6 à 2,1, en particulier de 1,6 à 1,9, et une couche chaude (24) conductrice transparente étant disposée directement à côté de la matrice (20) thermochromique, laquelle peut être chauffée par alimentation basse tension sur deux raccords d'arête latérale (25, 26) opposés à au moins plus de 30 °C et en particulier plus de 35 C, et la matrice (20) thermochromique passant d'un état transparent dans la gamme d'ondes visible à des températures d'intérieur usuelles inférieures à 30 °C ou 35 °C à un état brun foncé ou gris foncé opaque, l'élément en verre de projection étant bien transparent sans chauffage de la couche (24) et étant assombri seulement à la lumière du jour et dans le cas d'une projection par activation de la tension sur les raccords d'arête latérale (25, 26).

4. Elément de projection en verre (1) selon l'une quelconque des revendications 2 à 3, **caractérisé en ce que** la surface (19, 20, 22, 23) agissant de manière diffuse de l'élément en verre (2) est fabriquée par la pose de microbilles de verre (19) dans l'assemblage de butyrate de polyvinyle (20, 23), et **en ce que** les microbilles de verre présentent un diamètre de 5 µm à 2 mm, en particulier de 50 µm à 100 µm, et présentent un indice de réfraction d'environ 1,6 à 2,1, en particulier de 1,6 à 1,9, la pose des microbilles de verre (19) étant effectuée par le revêtement du film composite adhésif (22) avec une couche de liant ou d'adhésif (20) polymère, les microbilles de verre (19) étant noyées dans cette couche (20), et le film composite adhésif (22, 19, 20) étant fabriqué en autoclave avec au moins deux éléments de verre (5, 7) pour former un assemblage de verre de sécurité feuilleté (2).

5. Elément de projection en verre (1) selon l'une quelconque des revendications 2 à 4, **caractérisé en ce que** la pose des microbilles de verre (19) est effectuée par le revêtement du film composite adhésif (23) avec une couche de liant ou d'adhésif polymère (20), les microbilles de verre (19) étant noyées dans cette couche (20), et le film composite adhésif (23, 19, 20) est fabriqué en autoclave avec au moins deux éléments de verre (5, 7) pour former un assemblage de verre de sécurité feuilleté (2).

6. Elément de projection en verre (1) selon l'une quelconque des revendications 2 à 5, **caractérisé en ce que** la pose des microbilles de verre (19) est effectuée par le revêtement de la vitre (7) avec une couche de liant ou d'adhésif polymère (20) et les microbilles de verre (19) sont noyées dans cette couche (20) et sont fabriquées ensuite avec au moins un film composite adhésif (22, 23) en autoclave avec au moins un second élément en verre (5) pour former un assemblage de verre de sécurité feuilleté (2).

7. Elément de projection en verre (1) selon l'une quelconque des revendications 2 à 6, **caractérisé en ce que** la couche de liant (20) est réalisée teintée, photochromatique ou thermochromique, une couche chaude (24) conductrice transparente étant disposée directement à côté de la couche de liant (20) réalisée de manière thermochromique, laquelle peut être chauffée par alimentation basse tension sur deux raccords d'arête latérale (25, 26) opposés à au moins plus de 30 °C et en particulier plus de 35 C, et la matrice (20) thermochromique passant d'un état transparent dans une gamme d'ondes visible à des températures d'espace intérieur usuelles inférieures à 30 C ou 35 C à un état brun foncé ou gris foncé opaque de sorte que l'élément en verre de projection soit bien transparent sans chauffage de la couche (24) et assombri seulement à la lumière du jour et dans le cas d'une projection par activation de la tension sur les raccords d'arête latérale (25, 26).

8. Elément de projection en verre (1) selon l'une quelconque des revendications 2 à 7, **caractérisé en ce que** le film composite adhésif (22) ou le film composite adhésif (23) est réalisé de manière teintée ou photochromatique et la pose des microbilles de verre (19) est effectuée dans un film composite adhésif (23) par extrusion ou moulage ou est disposé en vrac dans un espace intermédiaire entre les éléments de verre (2, 3).

9. Procédé de fabrication d'un élément en verre de projection (1) selon l'une quelconque des revendications 1 à 8, **caractérisé par** le montage des microbilles de verre (19) sur une matrice adhésive (20) teintée ou se teintant au cours du revêtement pour la fabrication d'un élément en verre (2), à partir duquel en liaison avec un autre élément en verre (3), l'élément en verre de projection (1) est fabriqué.
